# EUROPEAN PATENT APPLICATION

(11) **EP 4 428 604 A1**
(43) Date of publication of application: **11.09.2024**
(21) Application number: 22923333.3
(22) Date of filing: 12.10.2022
(51) Int. Cl.: G02F 1/01

(54) **POLARIZATION-INDEPENDENT DEVICE AND APPARATUS, AND OPTICAL NETWORK SYSTEM**

(30) Priority: 27.01.2022 CN 202210101340; 01.06.2022 CN 202210623131
(71) Applicant: Huawei Technologies Co., Ltd., Shenzhen, Guangdong 518129 (CN)
(72) Inventor: LI, Jianxiong, Shenzhen, Guangdong 518129 (CN); WEN, Yuanhui, Shenzhen, Guangdong 518129 (CN); WU, Yunfei, Shenzhen, Guangdong 518129 (CN); ZONG, Liangjia, Shenzhen, Guangdong 518129 (CN)
(74) Representative: Pfenning, Meinig & Partner mbB
(86) International application number: PCT/CN2022/124897
(87) International publication number: WO 2023/142530

(57) **Abstract**

A polarization-insensitive device, an apparatus, and an optical network system are disclosed, and belong to the field of optical technologies. The polarization-insensitive device includes a liquid crystal layer and an adjustment layer that are stacked. The liquid crystal layer is configured to perform, under action of an electric field, first phase adjustment on a passing light component in a first polarization direction. The adjustment layer is configured to obtain a first light beam and a second light beam based on the incident light component in the first polarization direction that passes through the liquid crystal layer, second phase adjustment and polarization direction adjustment are performed on the first light beam at the adjustment layer, and the second phase adjustment and the polarization direction adjustment are not performed on the second light beam at the adjustment layer. A polarization direction of the first light beam is perpendicular to a polarization direction of the first light beam obtained before the polarization direction adjustment; and the first light beam and the second light beam have different propagation directions after passing through the liquid crystal layer. This application can resolve a problem of crosstalk between ports, and this application is used to adjust light.

## Description

This application claims priority to Chinese Patent Application No. 202210101340.8, filed with the China National Intellectual Property Administration on January 27, 2022 and entitled "POLARIZATION-INSENSITIVE DEVICE, APPARATUS, AND OPTICAL NETWORK SYSTEM", and priority to Chinese Patent Application No. 202210623131.X, filed with the China National Intellectual Property Administration on June 1, 2022 and entitled "POLARIZATION-INSENSITIVE DEVICE, APPARATUS, AND OPTICAL NETWORK SYSTEM", which are incorporated herein by reference in their entireties.

### TECHNICAL FIELD

This application relates to the field of optical technologies, and in particular, to a polarization-insensitive device, an apparatus, and an optical network system.

### BACKGROUND

A wavelength selective switch (wavelength selective switch, WSS) is a common apparatus in an optical network system. The WSS includes an input port and a plurality of output ports. The WSS may switch light input from the input port to any output port for output.

A polarization-insensitive device is an important component of the WSS, and the polarization-insensitive device includes a liquid crystal layer and an adjustment layer that are stacked. Light emitted from the input port to the polarization-insensitive device is transmitted to the output port along a path of the liquid crystal layer, the adjustment layer, and the liquid crystal layer. The light emitted from the input port to the polarization-insensitive device includes: a first light component having a first polarization direction and a second light component having a second polarization direction. The first polarization direction is perpendicular to the second polarization direction. The liquid crystal layer can perform, under action of an electric field, phase adjustment on a passing light component in the first polarization direction. Therefore, when the first light component and the second light component pass through the liquid crystal layer, the liquid crystal layer can perform phase adjustment on the first light component, and does not perform phase adjustment on the second light component. After the first light component and the second light component that pass through the liquid crystal layer arrive at the adjustment layer, the adjustment layer can perform polarization direction adjustment on these light components, and transmit these light components on which polarization direction adjustment is performed to the liquid crystal layer. A polarization direction of the first light component on which polarization direction adjustment is performed is changed from the first polarization direction to the second polarization direction, and a polarization direction of the second light component on which polarization direction adjustment is performed is changed from the second polarization direction to the first polarization direction. When the first light component on which polarization direction adjustment is performed and the second light component on which polarization direction adjustment is performed pass through the liquid crystal layer, the liquid crystal layer can perform phase adjustment on the second light component on which polarization direction adjustment is performed, and does not perform phase adjustment on the first light component on which polarization direction adjustment is performed. It can be learned that although the polarization directions of the first light component and the second light component are different, the polarization-insensitive device can perform phase adjustment once on the two light components by using the liquid crystal layer. Therefore, the polarization directions do not affect phase adjustment. In addition, after phase adjustment, a propagation direction of a light component is changed. The first light component and the second light component can be emitted to the output port after the phase adjustment is performed once on the two light components in the polarization-insensitive device.

However, due to a manufacturing defect of the adjustment layer, the adjustment layer cannot perform polarization direction adjustment on all incident first light components or all incident second light components. If the adjustment layer does not perform polarization direction adjustment on some first light components, when the first light components arrive at the liquid crystal layer again, the liquid crystal layer adjusts phases of the first light components again. As a result, these first light components that need to be emitted to a specific output port may be emitted to another output port, causing crosstalk between ports.

### SUMMARY

This application provides a polarization-insensitive device, an apparatus, and an optical network system, to resolve a problem of crosstalk between ports. The technical solutions are as follows:

According to a first aspect, a polarization-insensitive device is provided. The polarization-insensitive device includes: a liquid crystal layer and an adjustment layer that are stacked, where the liquid crystal layer is configured to perform, under action of an electric field, first phase adjustment on a passing light component in a first polarization direction; and the adjustment layer is configured to obtain a first light beam and a second light beam based on the incident light component in the first polarization direction that passes through the liquid crystal layer, and transmit the first light beam and the second light beam to the liquid crystal layer. Second phase adjustment and polarization direction adjustment are performed on the first light beam at the adjustment layer; and the polarization direction adjustment is used to change a polarization direction by 90 degrees. Therefore, a polarization direction of the first light beam is perpendicular to a polarization direction of the first light beam obtained before the polarization direction adjustment (a polarization direction of the first light beam obtained before the first light beam passes through the adjustment layer); and the first light beam and the second light beam have different propagation directions after passing through the liquid crystal layer.

In the polarization-insensitive device provided in this embodiment of this application, the adjustment layer may transmit, to the liquid crystal layer based on the incident light component in the first polarization direction that passes through the liquid crystal layer, the first light beam on which the second phase adjustment and the polarization direction adjustment are performed. In addition, the first light beam and the second light beam have different propagation directions after passing through the liquid crystal layer. It can be learned that different adjustment is performed on the first light beam and the second light beam in the polarization-insensitive device, so that the first light beam and the second light beam have different propagation directions when being emitted from the polarization-insensitive device, and the two types of light are isolated in space, to avoid impact of a light component of the second light beam on a light adjustment apparatus.

Optionally, a light component in at least one polarization direction is emitted to the liquid crystal layer from a side that is of the liquid crystal layer and that is away from the adjustment layer, and the liquid crystal layer is configured to perform, under action of an electric field, first phase adjustment on a light component in a first polarization direction in the light component in the at least one polarization direction. For a light component in each of the at least one polarization direction that is emitted to the adjustment layer and that passes through the liquid crystal layer, the adjustment layer may obtain two types of light beams based on the light component, and transmit the two types of light beams to the liquid crystal layer. In the two types of light beams, second phase adjustment and polarization direction adjustment are performed on one type of light beam in the adjustment layer, and the second phase adjustment and the polarization direction adjustment are not performed on the other type of light beam in the adjustment layer. In addition, the polarization direction adjustment is used to change a polarization direction by 90 degrees. The two types of light beams propagate in different propagation directions after passing through the liquid crystal layer. It may be understood that, when the at least one polarization direction includes another polarization direction other than the first polarization direction, the adjustment layer may not be configured to transmit the two types of light beams to the liquid crystal layer based on an incident light component that passes through the liquid crystal layer and that is in the another polarization direction. This is not limited in this application.

Further, different phase adjustment is performed at the adjustment layer on the foregoing two types of light beams transmitted by the adjustment layer to the liquid crystal layer. Optionally, other adjustment in the adjustment layer except the second phase adjustment and the polarization direction adjustment may alternatively be performed on a light beam that is in the two types of light beams and on which the second phase adjustment and the polarization direction adjustment are not performed. For example, third phase adjustment different from the second phase adjustment may be performed on the light beam at the adjustment layer. This is not limited in this application. For example, third phase adjustment different from the second phase adjustment may be performed on the second light beam at the adjustment layer. This is not limited in this application.

Further, the adjustment layer in the polarization-insensitive device provided in this application may be implemented in a plurality of manners. For example, the adjustment layer includes a function layer and a reflection layer that are sequentially stacked in a direction away from the liquid crystal layer, a reflection surface of the reflection layer faces the function layer, and the second phase adjustment and the polarization direction adjustment occur at the function layer. After passing through the liquid crystal layer, the light component is transmitted along a sequence of the function layer, the reflection layer, and the function layer and arrives at the liquid crystal layer again. In this process, the light component in the first polarization direction passes through the function layer twice. In this case, the second phase adjustment may include: phase adjustment in a process in which the light component in the first polarization direction passes through the function layer for the first time, and other phase adjustment in a process in which the light component in the first polarization direction passes through the function layer for the second time. The polarization direction adjustment may include: The light component in the first polarization direction is changed from a first linearly polarized light to a circularly polarized light in a process of passing through the function layer for the first time, and the light component in the first polarization direction is changed from the circularly polarized light to a second linearly polarized light in a process of passing through the function layer for the second time, and a polarization direction of the first linearly polarized light is perpendicular to a polarization direction of the second linearly polarized light.

Further, the liquid crystal layer adjusts the propagation direction of the light component in the first polarization direction in a manner of the first phase adjustment, and the adjustment layer adjusts the propagation direction of the light component in the first polarization direction in a manner of the second phase adjustment. In this process, an amplitude of light is not adjusted, and therefore, energy loss of the light is small.

Further, a part (for example, the foregoing function layer) that is of the adjustment layer and that is used to perform the second phase adjustment and the polarization direction adjustment may have a plurality of implementations. The following uses one of the implementations as an example for description.

For example, the part that is of the adjustment layer and that is used to perform the second phase adjustment and the polarization direction adjustment includes a plurality of adjustment structures that are arranged at intervals, and the plurality of adjustment structures may form a metasurface structure or another structure different from the metasurface structure. Optionally, both the second phase adjustment and the polarization direction adjustment are related to at least one parameter of a material, a size, a shape, and an arrangement manner of the adjustment structure. When the part that is of the adjustment layer and that is used to perform the second phase adjustment and the polarization direction adjustment is designed, the at least one parameter may be set based on a function that needs to be implemented by the adjustment layer.

Optionally, the part that is of the adjustment layer and that is used to perform the second phase adjustment and the polarization direction adjustment includes a plurality of adjustment structures that are arranged at intervals. The plurality of adjustment structures include a first adjustment structure group and a second adjustment structure group that are alternately arranged in a first direction. The first direction may be perpendicular to a major axis direction of a liquid crystal in the liquid crystal layer to which no electric field is applied. The first direction may alternatively be another direction. This is not limited in this application. A range of an included angle between a longest central axis of an adjustment structure in the first adjustment structure group and a longest central axis of an adjustment structure in the second adjustment structure group is [80 degrees, 100 degrees]. For example, the longest central axis of the adjustment structure in the first adjustment structure group is perpendicular to the longest central axis of the adjustment structure in the second adjustment structure group.

It should be noted that the adjustment structure has a central axis, and the adjustment structure may be symmetrical (completely symmetric) or approximately symmetric (not completely symmetric) with respect to the central axis. The adjustment structure may have one or more central axes. This is not limited in this application. However, the one or more central axes have a longest central axis. For example, the adjustment structure may be in a rod shape (for example, a cuboid, a cylinder, or an ellipse) or an ellipsoid shape (or another shape). The adjustment structure is characterized by anisotropy. The longest central axis of the adjustment structure may be referred to as a long axis, and a shortest central axis may be referred to as a short axis. The adjustment structure may be in a regular shape, or may be in an irregular shape. This is not limited in this application.

Optionally, the first adjustment structure group and the second adjustment structure group include at least two adjustment structures that are sequentially arranged in the first direction, and phase retardance amounts, of the first light beam existing before passing through the adjustment layer, on the at least two adjustment structures are in ascending order or descending order. In this application, a change range of the phase retardance amounts, of the first light beam existing before passing through the adjustment layer, on the at least two adjustment structures may be [0, 2π]. Optionally, the change range may not be [0, 2π]. For example, the change range is [0, π], [0, 3π/2], or [π, 2π]. It should be noted that, the phase retardance amounts, of the first light beam existing before passing through the adjustment layer, on the at least two adjustment structures may be in linear ascending order or linear descending order, or may be in non-linear ascending order or non-linear descending order. Compared with a case in which the phase retardance amounts, of the first light beam existing before passing through the adjustment layer, on the at least two adjustment structures are in non-linear ascending order or non-linear descending order, in a case in which the phase retardance amounts, of the first light beam existing before passing through the adjustment layer, on the at least two adjustment structures are in linear ascending order or linear descending order, energy of light emitted from the polarization-insensitive device is higher.

When the phase retardance amounts, of the first light beam existing before passing through the adjustment layer, on the at least two adjustment structures are in ascending order or descending order, in the first direction, these adjustment structures form a phase gradient for the phase retardance amounts of the first light beam existing before passing through the adjustment layer. The phase gradient may change a phase of light, to perform second phase adjustment on the first light beam existing before passing through the adjustment layer. For example, sinθ=P/K. θ=α-β, where α represents an adjustment angle of the polarization-insensitive device for a propagation direction of the first light beam existing before passing through the liquid crystal layer that is emitted from a side that is of the liquid crystal layer and that is away from the adjustment layer; and β represents an adjustment angle of a part of the polarization-insensitive device except the adjustment layer for a propagation direction of the first light beam existing before passing through the liquid crystal layer. In other words, θ may be considered as a change angle of an adjustment angle of the polarization-insensitive device for a propagation direction of the first light beam existing before passing through the liquid crystal layer that is vertically emitted from a side that is of the liquid crystal layer and that is away from the adjustment layer after the adjustment layer is introduced. sinθ represents a sine of θ, P represents a phase gradient, and K represents a light wave vector.

Further, the polarization-insensitive device may further meet at least one of the following conditions: a quantity of adjustment structures in the first adjustment structure group is the same as a quantity of adjustment structures in the second adjustment structure group; adjustment structures with a same ranking in the first adjustment structure group and the second adjustment structure group have a same size; and for one adjustment structure group in the first adjustment structure group and the second adjustment structure group, when a quantity of adjustment structures in the adjustment structure group is greater than 1, sizes of different adjustment structures in the adjustment structure group are different. In this application, an example in which the polarization-insensitive device meets all these conditions is used.

It may be understood that, a quantity of adjustment structures in the first adjustment structure group and a quantity of adjustment structures in the second adjustment structure group may alternatively be different; and/or adjustment structures with a same ranking in the first adjustment structure group and the second adjustment structure group may alternatively have different sizes; and/or for one adjustment structure group in the first adjustment structure group and the second adjustment structure group, when a quantity of adjustment structures in the adjustment structure group is greater than 1, sizes of different adjustment structures in the adjustment structure group may alternatively be the same. In addition, a material of the adjustment structure may include a material such as gold, silver, aluminum, silicon, gallium nitride, and titanium oxide. The adjustment structure may include one material, or may include a plurality of materials. In addition, a refractive index of an outer layer material of the adjustment structure in the first adjustment structure group may be the same as or different from a refractive index of an outer layer material of the adjustment structure in the second adjustment structure group.

Further, for one adjustment structure group in the first adjustment structure group and the second adjustment structure group, a quantity of adjustment structures in the adjustment structure group may be 1, or may be greater than 1.

Optionally, when the plurality of adjustment structures include some adjustment structures arranged in a direction perpendicular to the first direction, phase retardance amounts of the first light beam existing before passing through the adjustment layer on different adjustment structures in these adjustment structures may be the same. It may be understood that phase retardance amounts of the first light beam on different adjustment structures arranged in a direction may alternatively be different. Alternatively, the plurality of adjustment structures may not include different adjustment structures arranged in a direction perpendicular to the first direction. For example, the plurality of adjustment structures include only one row of adjustment structures arranged in the first direction. This is not limited in this application.

Optionally, a range of an included angle between the longest central axis of the adjustment structure and a major axis direction of a liquid crystal in the liquid crystal layer to which no electric field is applied is [40 degrees, 50 degrees], and a range of a difference between a phase retardance amount, of the first light beam existing before passing through the adjustment layer, on the adjustment structure in an extension direction of a longest central axis of the adjustment structure and a phase retardance amount, of the first light beam existing before passing through the adjustment layer, on the adjustment structure in a direction perpendicular to the extension direction is [0.9π, 1.1π] (the directions are two orthogonal directions). In this case, the adjustment structure can perform the polarization direction adjustment on the first light beam. For example, the difference between the phase retardance amounts may be π, and/or the included angle may be 45 degrees.

In this application, parameters such as a material, a size, a shape, and an arrangement manner (related to the longest central axis of the adjustment structure, an arrangement sequence of the adjustment structure, a distance between centers of adjacent adjustment structures, and the like) of the adjustment structure may be designed and adjusted, so that the adjustment layer has functions of the second phase adjustment and the polarization direction adjustment.

Further, regardless of how the adjustment structure is arranged, a maximum length of the adjustment structure may be less than a wavelength of incident light, and the adjustment structure may be referred to as a sub-wavelength structure. A wavelength of light is usually a nanometer-level length. Therefore, when the maximum length of the adjustment structure is less than the wavelength of the light, the size of the adjustment structure is small, a thickness of the adjustment layer in which the adjustment structure is located is small, a thickness of the entire polarization-insensitive device is small, a drive voltage used to drive the liquid crystal layer is small, and power consumption for driving the liquid crystal layer to deflect is small. In this application, an example in which the maximum length of the adjustment structure is a nanometer-level length is used. Optionally, the maximum length of the adjustment structure may be a micron-level length or the like. This is not limited in this application. When the adjustment structure has a micron-level size or a nanometer-level size, the adjustment structure may be referred to as a micro-nano structure.

Optionally, the part that is of the adjustment layer and that is used to perform the second phase adjustment and the polarization direction adjustment may include a plurality of sublayers, and each sublayer includes the foregoing plurality of adjustment structures.

It should be noted that, in the foregoing content, that the adjustment layer performs the second phase adjustment and the polarization direction adjustment by using the plurality of adjustment structures is used as an example. It may be understood that, when the adjustment layer further needs to perform other adjustment (for example, the third phase adjustment that may be performed on the second light beam) in addition to the second phase adjustment and the polarization direction adjustment, the other adjustment may also be implemented by using the plurality of adjustment structures. At least one of parameters such as a material, a size, a shape, and an arrangement manner of the adjustment structure may be designed based on functions required by the plurality of adjustment structures.

Further, the liquid crystal layer may deflect under action of an electric field, to perform phase adjustment on the light component having the first polarization direction. The electric field may be applied to the liquid crystal layer by an electric field applying component. The electric field applying component may be located inside the polarization-insensitive device, or may be located outside the polarization-insensitive device, or a part of the electric field applying component is located inside the polarization-insensitive device, and the other part is located outside the polarization-insensitive device.

For example, when the adjustment layer includes the function layer and the reflection layer, the polarization-insensitive device further includes a transparent electrode layer and a liquid crystal drive circuit, the transparent electrode layer is located on a side that is of the liquid crystal layer and that is away from the reflection layer, the liquid crystal drive circuit is located on a side that is of the reflection layer and that is away from the liquid crystal layer, and the reflection layer is conductive; and the liquid crystal drive circuit is configured to apply a voltage to the transparent electrode layer and the reflection layer, so that the electric field is formed between the transparent electrode layer and the reflection layer. The liquid crystal in the liquid crystal layer can deflect under the action of the electric field.

Further, the polarization-insensitive device further includes another structure. For example, the polarization-insensitive device further includes a first alignment layer, a second alignment layer, a planarization layer, and a passivation layer. In the polarization-insensitive device, the transparent electrode layer, the first alignment layer, the liquid crystal layer, the second alignment layer, the planarization layer, the function layer, the passivation layer, the reflection layer, and the liquid crystal drive circuit are sequentially stacked. The first alignment layer and the second alignment layer are configured to align the liquid crystal layer, so that major axis directions of liquid crystals in the liquid crystal layer are parallel to each other (or tend to be parallel to each other) when no electric field is applied. The planarization layer is used for planarization of a surface of the function layer, to support a subsequent packaging process of the liquid crystal layer.

According to a second aspect, a light adjustment apparatus is provided, where the light adjustment apparatus includes the polarization-insensitive device according to any design of the first aspect, and the light adjustment apparatus is configured to perform phase adjustment on light by using the polarization-insensitive device. For example, the light adjustment apparatus may be any apparatus that can perform phase adjustment on light, for example, a WSS, a reconfigurable optical add/drop multiplexer (reconfigurable optical add/drop multiplexer, ROADM) in which the WSS is located, a spatial light modulator, or a display apparatus.

Optionally, the light adjustment apparatus further includes a plurality of ports (including an input port and a plurality of output ports). The input port is configured to provide light to a side on which the liquid crystal layer of the polarization-insensitive device is located. The polarization-insensitive device is configured to emit the first light beam existing after passing through the liquid crystal layer (the first light beam that passes through the liquid crystal layer and that is emitted, out of the liquid crystal layer, from a side that is of the liquid crystal layer and that is away from the adjustment layer) to the output port, and emit the second light beam that existing after passing through the liquid crystal layer (the second light beam that passes through the liquid crystal layer and that is emitted, out of the liquid crystal layer, from the side that is of the liquid crystal layer and that is away from the adjustment layer) to a direction that deviates from the output port. In other words, when the light adjustment apparatus includes the input port and the plurality of output ports, a location of the output port may be designed, so that the first phase adjustment, the second phase adjustment, and the polarization direction adjustment are performed on a light beam emitted from the polarization-insensitive device to the output port in the polarization-insensitive device, and a light beam on which the second phase adjustment and the polarization direction adjustment are not performed in the polarization-insensitive device is not emitted to the output port. In this way, port crosstalk caused by a light beam on which polarization direction adjustment is not performed by the adjustment layer being emitted to the output port can be avoided.

Further, it can be learned from the foregoing first aspect that propagation paths of the light component in the first polarization direction before and after passing through the liquid crystal layer are both on a first plane, and propagation paths of the first light beam and the second light beam emitted from the adjustment layer to the liquid crystal layer are both on a second plane. The first plane and the second plane are coplanar, or an included angle between the first plane and the second plane is greater than zero degrees.

In a first possible implementation, when the first plane and the second plane are coplanar, the input port and the plurality of output ports are sequentially arranged in a direction parallel to the first plane and the polarization-insensitive device, and the polarization-insensitive device is perpendicular to the first plane. It should be noted that the polarization-insensitive device is a device obtained by stacking a plurality of film layers. That the polarization-insensitive device is perpendicular to the first plane means that the plurality of film layers are all perpendicular to the first plane, and a stacking direction of the plurality of film layers is parallel to the first plane. In this case, the plurality of output ports are located on one side of the input port. In the incident light, a light beam on which the first phase adjustment, the second phase adjustment, and the polarization direction adjustment are performed in the polarization-insensitive device is emitted to an output port on a side of the input port, and a light beam on which the second phase adjustment and the polarization direction adjustment are not performed in the polarization-insensitive device is emitted to the input port or a side of the input port away from the output port.

In a second possible implementation, when the included angle between the first plane and the second plane is greater than zero degrees (for example, the included angle is 90 degrees), the plurality of ports are sequentially arranged in a direction parallel to the first plane and a reference plane, and the reference plane is perpendicular to the first plane; and the polarization-insensitive device rotates by -θ/2 relative to the reference plane, where θ =α-β, and α represents an adjustment angle of the polarization-insensitive device for a propagation direction of the first light beam existing before sequentially passing through the liquid crystal layer and the adjustment layer, and β represents an adjustment angle of a part of the polarization-insensitive device except the adjustment layer for a propagation direction of the first light beam existing before sequentially passing through the liquid crystal layer and the adjustment layer.

In a second possible implementation, adjustment performed by the polarization-insensitive device on the propagation direction of the first light beam existing before sequentially passing through the liquid crystal layer and the adjustment layer is related to three factors, and the three factors include: (1) the first phase adjustment performed by the liquid crystal layer on the light component in the first polarization direction under the action of the electric field; (2) the second phase adjustment of the adjustment layer; and (3) a rotation angle of the polarization-insensitive device relative to the reference plane. Adjustment performed by the polarization-insensitive device on the propagation direction of the second light beam existing before sequentially passing through the liquid crystal layer and the adjustment layer is related to the factors (1) and (3).

When no electric field is applied to the liquid crystal layer, adjustment performed by the polarization-insensitive device on the propagation direction of the first light beam existing before sequentially passing through the liquid crystal layer and the adjustment layer is related to the factors (2) and (3). The factor (2) causes a change angle θ of the propagation direction, and the factor (3) causes a change angle -θ of the propagation direction. Therefore, the factors (2) and (3) cause the change angles of the propagation direction to offset each other. When an electric field is applied to the liquid crystal layer, in one aspect, for the first light beam existing before sequentially passing through the liquid crystal layer and the adjustment layer, because the factor (2) and the factor (3) are offset each other, a propagation direction of the light beam when being emitted from the polarization-insensitive device is related to the factor (1), and the light beam may be transmitted to the output port under action of the liquid crystal layer. In another aspect, for the second light beam existing before sequentially passing through the liquid crystal layer and the adjustment layer, a propagation direction of the light beam when being emitted from the polarization-insensitive device is related to the factor (1) and the factor (3). The light beam may be transmitted to any side of the plurality of ports in a dispersion direction under influence of the factor (1) and the factor (3), to avoid a light beam on which polarization direction adjustment is not performed from being emitted to the output port.

Further, the light adjustment apparatus may further include another structure. For example, the light adjustment apparatus further includes a lens (for example, a convex lens) located between the polarization-insensitive device and the plurality of ports.

According to a third aspect, an optical network system is provided. The optical network system includes the light adjustment apparatus according to any design in the second aspect. For example, the optical network system performs communication by using light, and the light adjustment apparatus may perform phase adjustment on the light by using a polarization-insensitive device in the optical network system, to implement port switching of the light.

For effects of the second aspect and the third aspect, refer to effects of corresponding designs in the first aspect. Details are not described herein in this application.

### BRIEF DESCRIPTION OF DRAWINGS

FIG. 1 is a diagram of a structure of a polarization-insensitive device according to an embodiment of this application;
FIG. 2 is a diagram of transmission of a light component according to an embodiment of this application;
FIG. 3 is a diagram of a polarization direction of a first light component according to an embodiment of this application;
FIG. 4 is a diagram of a polarization direction of a second light component according to an embodiment of this application;
FIG. 5 is a diagram of a propagation direction of a first light component according to an embodiment of this application;
FIG. 6 is a diagram of a structure of a WSS according to an embodiment of this application;
FIG. 7 is a diagram of another structure of a polarization-insensitive device according to an embodiment of this application;
FIG. 8 is a diagram of a polarization status of a liquid crystal according to an embodiment of this application;
FIG. 9 is a diagram of another structure of a polarization-insensitive device according to an embodiment of this application;
FIG. 10 is a diagram of transmission of a light component in a WSS according to an embodiment of this application;
FIG. 11 is another diagram of transmission of a light component in a WSS according to an embodiment of this application;
FIG. 12 is a diagram of a propagation path of a light component according to an embodiment of this application;
FIG. 13 is a diagram of another structure of a polarization-insensitive device according to an embodiment of this application;
FIG. 14 is a diagram of a distribution status of a plurality of adjustment structures according to an embodiment of this application;
FIG. 15 is a diagram of another distribution status of a plurality of adjustment structures according to an embodiment of this application;
FIG. 16 is a diagram of another distribution status of a plurality of adjustment structures according to an embodiment of this application;
FIG. 17 is a diagram of another distribution status of a plurality of adjustment structures according to an embodiment of this application;
FIG. 18 is a diagram of another distribution status of a plurality of adjustment structures according to an embodiment of this application;
FIG. 19 is a diagram of another distribution status of a plurality of adjustment structures according to an embodiment of this application;
FIG. 20 is a diagram of another structure of a polarization-insensitive device according to an embodiment of this application;
FIG. 21 is a diagram of another structure of a polarization-insensitive device according to an embodiment of this application; and
FIG. 22 is a diagram of another structure of a WSS according to an embodiment of this application.

### DESCRIPTION OF EMBODIMENTS

To make principles and technical solutions of this application clearer, the following further describes implementations of this application in detail with reference to the accompanying drawings.

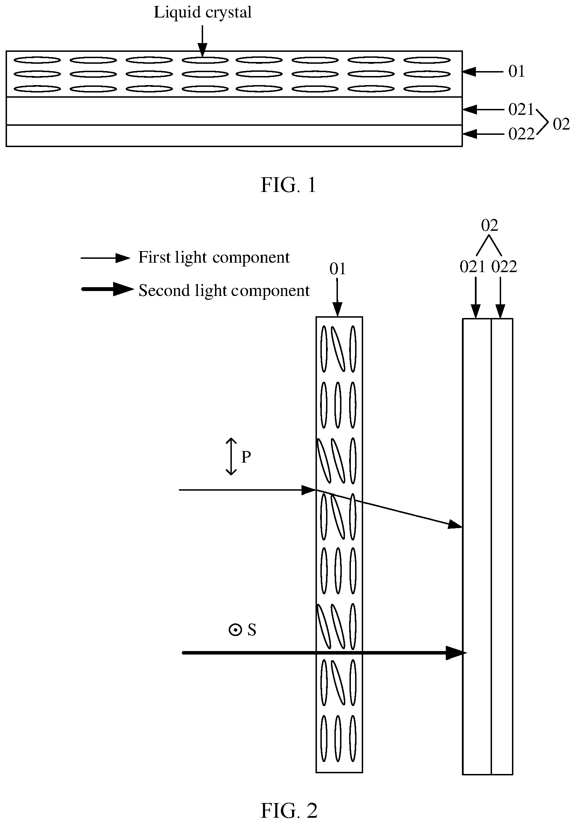

A polarization-insensitive device is a common device in the optical field. As shown in FIG. 1, the polarization-insensitive device includes a liquid crystal layer 01 and an adjustment layer 02 that are stacked. This polarization-insensitive device is also referred to as a liquid crystal on silicon (liquid crystal on silicon, LCoS). A liquid crystal in the liquid crystal layer 01 may be a nematic liquid crystal, a ferroelectric liquid crystal, or the like. In embodiments of this application, the nematic liquid crystal is used as an example. The adjustment layer 02 may include a half-wave plate (half-wave plate, HWP) 02 and a reflection layer 022, and a reflection surface of the reflection layer 022 faces the HWP 021. After light is emitted to the liquid crystal layer 01 from a side that is of the liquid crystal layer 01 and that is away from the adjustment layer 02, the light is transmitted along a path of the liquid crystal layer 01, the HWP 021, the reflection layer 022, the HWP 021, and the liquid crystal layer 01.

As shown in FIG. 2, the light emitted from a side that is of the liquid crystal layer 01 and that is away from the adjustment layer 02 includes a first light component having a first polarization direction P and a second light component having a second polarization direction S. The first polarization direction P is perpendicular to the second polarization direction S. In a case in which the emitted light is polarization light, the first light component or the second light component may be zero. In this case, the light emitted from a side that is of the liquid crystal layer 01 and that is away from the adjustment layer 02 includes the first light component or the second light component. Optionally, in this embodiment of this application, that the first polarization direction P is parallel to a major axis direction of a liquid crystal in the liquid crystal layer 01 to which no electric field is applied is used as an example. Optionally, the first polarization direction P may not be parallel to the major axis direction. This embodiment of this application imposes no limitation on the first polarization direction.

Still refer to FIG. 2. A liquid crystal in the liquid crystal layer 01 can deflect under action of an electric field (as shown in FIG. 2), so that the liquid crystal layer 01 performs phase adjustment on a light component in the first polarization direction P, and does not perform phase adjustment on a light component that does not have the first polarization direction P. In addition, after the phase adjustment, a propagation direction of the light component is changed. The applied electric field to the liquid crystal layer 01 may be referred to as a loading phase diagram of the liquid crystal layer 01. Because the first light component has the first polarization direction P, the liquid crystal layer 01 performs, under the action of the electric field, phase adjustment on the passing first light component, so that a propagation direction of the first light component is changed. Because the second polarization direction S of the second light component is different from the first polarization direction P, the liquid crystal layer 01 does not perform the phase adjustment on the passing second light component under action of the electric field. Therefore, the propagation direction of the second light component remains unchanged.

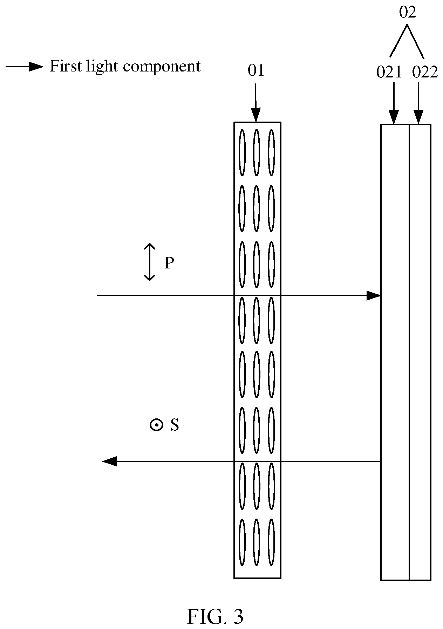

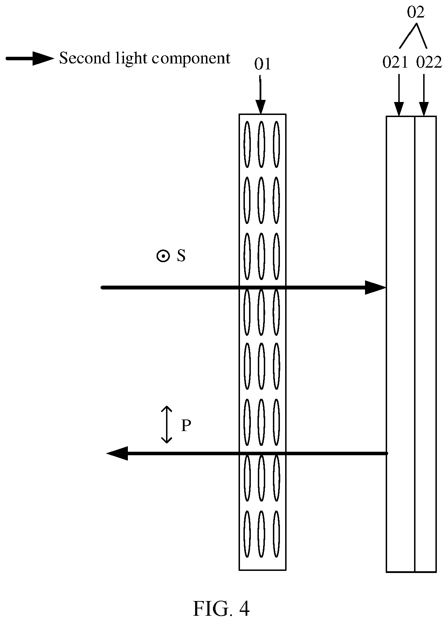

After the first light component and the second light component that pass through the liquid crystal layer 01 arrive at the adjustment layer 02, the adjustment layer 02 can perform polarization direction adjustment on these light components, and transmit these light components on which polarization direction adjustment is performed to the liquid crystal layer 01. A polarization direction of the first light component on which polarization direction adjustment is performed is changed from the first polarization direction P to the second polarization direction S, and a polarization direction of the second light component on which polarization direction adjustment is performed is changed from the second polarization direction S to the first polarization direction P. For example, the adjustment layer 02 includes the HWP 021 and the reflection layer 022. After the first light component and the second light component that pass through the liquid crystal layer 01 arrive at the HWP 021, the HWP 021 is configured to perform polarization direction adjustment on the first light component and the second light component, and emit these light components from the HWP 021 to the liquid crystal layer 01 under action of the reflection layer 022. As shown in FIG. 3, when no electric field is applied to the liquid crystal layer 01, the first light component that passes through the liquid crystal layer 01 has the first polarization direction P when being emitted from the liquid crystal layer 01 to the HWP 021, but the first light component existing after passing through the adjustment layer 02 has the second polarization direction S that is perpendicular to the first polarization direction P when being emitted from the HWP 021 to the liquid crystal layer 01. As shown in FIG. 4, when no electric field is applied to the liquid crystal layer 01, the second light component that passes through the liquid crystal layer 01 has the second polarization direction S when being emitted from the liquid crystal layer 01 to the HWP 021, but the second light component existing after passing through the adjustment layer 02 has the first polarization direction P perpendicular to the second polarization direction S when being emitted from the HWP 021 to the liquid crystal layer 01.

When the first light component and the second light component that pass through the adjustment layer 02 arrive at the liquid crystal layer 01 again, because a polarization direction of the first light component that passes through the adjustment layer 02 is the second polarization direction S, and a polarization direction of the second light component that passes through the adjustment layer 02 is the first polarization direction P, the liquid crystal layer 01 performs, under action of the electric field, phase adjustment on the second light component that passes through the adjustment layer 02, but does not perform the phase adjustment on the first light component that passes through the adjustment layer 02 (this process is not shown in the accompanying drawings).

It can be learned that although the polarization directions of the first light component and the second light component are different, the polarization-insensitive device can perform phase adjustment once on the two light components by using the liquid crystal layer 01. Therefore, the polarization directions do not affect phase adjustment, and the polarization directions do not affect a propagation direction of a light component emitted from the polarization-insensitive device.

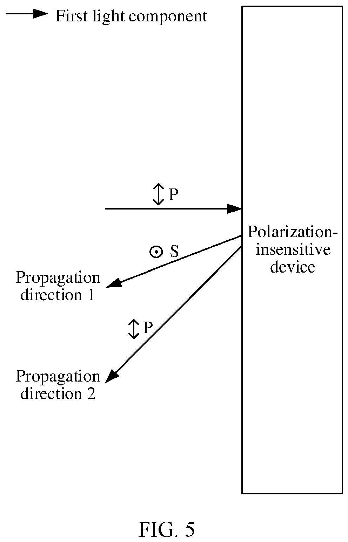

However, because the adjustment layer 02 (for example, the HWP 021 in the adjustment layer 02) has a manufacturing defect, the adjustment layer 02 cannot adjust polarization directions of all incident light components. If the adjustment layer 02 does not perform polarization direction adjustment on a part of the first light component that passes through the liquid crystal layer 01, when the part of the first light component that passes through the adjustment layer 02 arrives at the liquid crystal layer 01, the part of the first light component still has the first polarization direction P. Because a liquid crystal in the liquid crystal layer 01 can deflect under action of the electric field, to perform phase adjustment on a light component having the first polarization direction P, when the part of first light component arrives at the liquid crystal layer 01 again, the liquid crystal layer 01 perform phase adjustment again on the first light component. It can be learned that a propagation direction of the first light component is adjusted twice by the liquid crystal layer 01. For example, as shown in FIG. 5, it is assumed that the first light component has a propagation direction 1 after phase adjustment is performed for the first time on the first light component by the liquid crystal layer 01 in the polarization-insensitive device, and the first light component has a propagation direction 2 after phase adjustment is performed for the second time on the first light component by the liquid crystal layer 01 in the polarization-insensitive device. The propagation direction 1 and the propagation direction 2 are different.

Further, the polarization-insensitive device may be applied to a light adjustment apparatus, such as a WSS, a ROADM in which the WSS is located, a spatial light modulator, or a display apparatus. If phase adjustment is performed on the first light component twice in the polarization-insensitive device, normal operation of the light adjustment apparatus is affected.

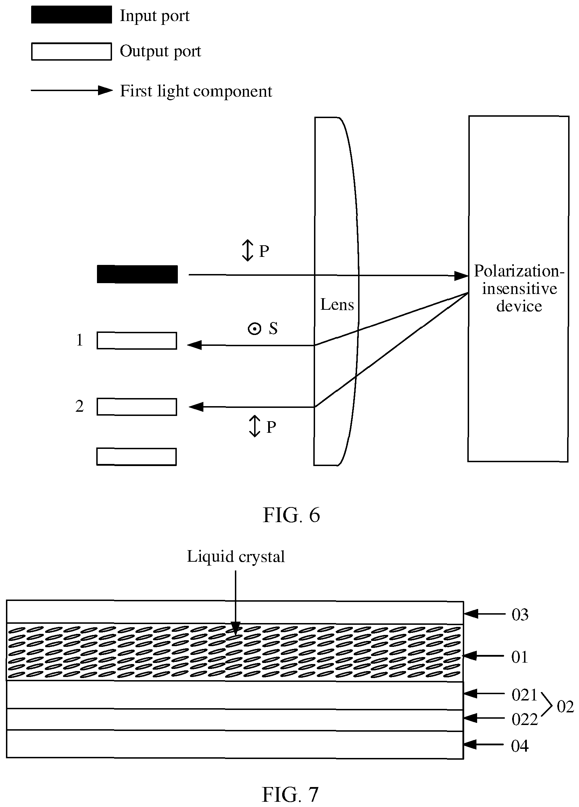

For example, in the WSS, in addition to the polarization-insensitive device, the WSS further includes an input port and a plurality of output ports (both the input port and the output port may be ports of an optical fiber). If phase adjustment is performed on some first light components twice in the polarization-insensitive device, these first light components that need to be emitted to a specific output port may be emitted to another output port, causing crosstalk between ports. As shown in FIG. 6, the WSS includes an input port, a plurality of output ports, a lens, and the polarization-insensitive device. In light emitted from the polarization-insensitive device, a first light component (with the second polarization direction S) on which phase adjustment is performed once in the polarization-insensitive device is emitted to an output port 1, and a first light component (with the first polarization direction P) on which phase adjustment is performed twice in the polarization-insensitive device is emitted to an output port 2, so that crosstalk exists between the output ports 1 and 2.

For another example, in a spatial light modulator, if phase adjustment is performed twice on a first light component in the polarization-insensitive device, the first light component cannot be effectively modulated. In the display apparatus, if phase adjustment is performed twice on a first light component in the polarization-insensitive device, a display effect of the display apparatus is affected.

In addition, the HWP 021 in the adjustment layer 02 is usually made of a cured liquid crystal material or a micro-nano material having a birefringence characteristic. When the HWP 021 is manufactured by using a cured liquid crystal material, the HWP can be manufactured only by using a liquid crystal material with a micron-level thickness. As a result, the HWP is thick, and the polarization-insensitive device is thick, and consequently, an application scenario of the polarization-insensitive device is limited.

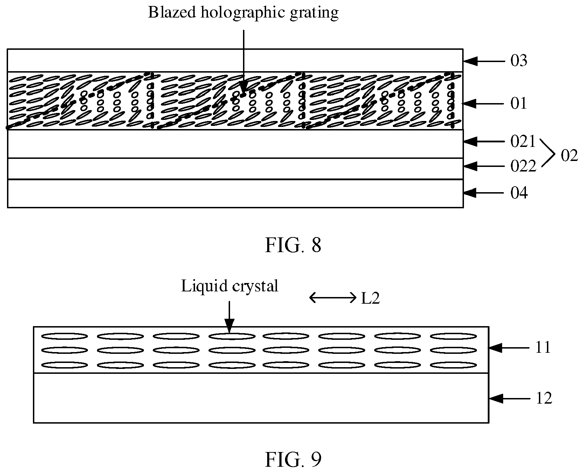

In addition, as shown in FIG. 7, the polarization-insensitive device may usually further include a transparent electrode 03 and a liquid crystal drive circuit 04 (for example, a liquid crystal on silicon drive circuit). The transparent electrode 03 is located on a side that is of the liquid crystal layer 01 and that is away from the adjustment layer 02, and the liquid crystal drive circuit 04 is located on a side that is of the adjustment layer 02 and that is away from the liquid crystal layer 01. The reflection layer 022 is conductive, and the liquid crystal drive circuit 04 is connected to the transparent electrode 03 and the reflection layer 022. The liquid crystal drive circuit 04 is configured to apply a voltage to the transparent electrode 03 and the reflection layer 022, so that an electric field is formed between the transparent electrode 03 and the reflection layer 022, and a liquid crystal in the liquid crystal layer 01 deflects under action of the electric field, so that the liquid crystal layer 01 performs phase adjustment on the light component in the first polarization direction P under the action of the electric field. For example, when an electric field is formed between the transparent electrode 03 and the reflection layer 022, a deflection status of a liquid crystal in the liquid crystal layer 01 in FIG. 7 may be shown in FIG. 8. Refer to FIG. 8. The liquid crystal layer 01 may form a blazed holographic grating under action of an electric field, to perform phase adjustment on the light component in the first polarization direction P.

In the polarization-insensitive device, when the HWP is thick, a distance between the transparent electrode and the reflection layer is relatively large. In this case, if an electric field needs to be applied to the liquid crystal layer by using the transparent electrode and the reflection layer, a liquid crystal drive circuit needs to apply a high drive voltage to the transparent electrode and the reflection layer. Consequently, power consumption of the polarization-insensitive device is high, and an application scenario of the polarization-insensitive device is limited.

An embodiment of this application provides a polarization-insensitive device. The device can enable light on which polarization direction adjustment is performed and light on which polarization direction adjustment is not performed to have different propagation directions, so that the two types of light are isolated in space, to avoid impact of the light on which polarization direction adjustment is not performed on a light adjustment apparatus. In addition, in the polarization-insensitive device provided in this embodiment of this application, a thickness of a film layer used to adjust a polarization direction is relatively small, and a liquid crystal drive circuit does not need to apply a high drive voltage to a transparent electrode and a reflection layer. Therefore, power consumption of the polarization-insensitive device is low.

For example, FIG. 9 is a diagram of a structure of a polarization-insensitive device according to an embodiment of this application. As shown in FIG. 9, the polarization-insensitive device includes a liquid crystal layer 11 and an adjustment layer 12 that are stacked.

The liquid crystal layer 11 is configured to perform, under action of an electric field, first phase adjustment on a passing light component in a first polarization direction. For a function of the liquid crystal layer 11, refer to the foregoing function of the liquid crystal layer 01. Details are not described in this embodiment of this application. For example, the liquid crystal layer 11 can receive incident light on a side that is of the liquid crystal layer 11 and that is away from the adjustment layer 12. The light has light components in a first polarization direction and a second polarization direction, and the first polarization direction is perpendicular to the second polarization direction. The liquid crystal layer 11 may perform the first phase adjustment on the light component in the first polarization direction under action of an electric field, but may not perform the first phase adjustment on the light component in the second polarization direction.

The adjustment layer 12 is configured to: obtain a first light beam and a second light beam based on the incident light component in the first polarization direction that passes through the liquid crystal layer 11, and transmit the first light beam and the second light beam to the liquid crystal layer 11. Second phase adjustment and polarization direction adjustment are performed on the first light beam at the adjustment layer 12, and the second phase adjustment and the polarization direction adjustment are not performed on the second light beam at the adjustment layer 12. The polarization direction adjustment is used to change a polarization direction by 90 degrees. Therefore, a polarization direction of the first light beam is perpendicular to a polarization direction of the first light beam obtained before the polarization direction adjustment (a polarization direction of the first light beam obtained before the first light beam passes through the adjustment layer). Propagation directions of the first light beam and the second light beam existing after passing through the liquid crystal layer 11 are different, that is, propagation directions of the first light beam and the second light beam existing after being emitted from the adjustment layer 12 to the liquid crystal layer 11 and passing through the liquid crystal layer 11 are different.

It can be seen that, for a light component in the first polarization direction emitted to the adjustment layer 12, the adjustment layer can perform the second phase adjustment and the polarization direction adjustment on some light beams in the light component, to obtain the first light beam and the second light beam, the first light beam is a light beam on which the second phase adjustment and the polarization direction adjustment are performed, and the second light beam is a light beam on which the second phase adjustment and the polarization direction adjustment are not performed. In the first light beam and the second light beam, the second phase adjustment is also performed on a light beam on which polarization direction adjustment is performed, and the second phase adjustment is not performed on a light beam on which polarization direction adjustment is not performed. Therefore, different phase adjustment is performed on the first light beam and the second light beam, and the first light beam and the second light beam have different propagation directions when being emitted from the adjustment layer 12 to the liquid crystal layer 11, so that the first light beam and the second light beam are separated.

Compared with the polarization-insensitive device shown in FIG. 1, the polarization-insensitive device shown in FIG. 9 includes an adjustment layer 12, and the adjustment layer 12 may not only perform polarization direction adjustment, but also perform second phase adjustment. In this case, components that can perform phase adjustment on light in the polarization-insensitive device not only include the liquid crystal layer 11 configured to perform the first phase adjustment, but also include the adjustment layer 12 configured to perform the second phase adjustment. In this way, a propagation direction of light on which polarization direction adjustment is performed emitted from the polarization-insensitive device is related to not only the first phase adjustment of the liquid crystal layer 11, but also the second phase adjustment of the adjustment layer 12. A propagation direction of light on which polarization direction adjustment is not performed emitted from the polarization-insensitive device is related to the first phase adjustment of the liquid crystal layer 11, but is not related to the second phase adjustment of the adjustment layer 12. It can be learned that, when the light on which polarization direction adjustment is performed is emitted from the polarization-insensitive device, there are two control points: the liquid crystal layer 11 and the adjustment layer 12, and when the light on which polarization direction adjustment is not performed is emitted from the polarization-insensitive device, there is one control point: the liquid crystal layer 11. Therefore, different phase adjustment is performed on the light on which polarization direction adjustment is performed and the light on which polarization direction adjustment is not performed in the polarization-insensitive device, so that the light on which polarization direction adjustment is performed and the light on which polarization direction adjustment is not performed have different propagation directions when being emitted from a side that is of the liquid crystal layer 11 and that is away from the adjustment layer 12.

In conclusion, in the polarization-insensitive device provided in this embodiment of this application, the adjustment layer may transmit, to the liquid crystal layer based on the incident light component in the first polarization direction that passes through the liquid crystal layer, the first light beam on which the second phase adjustment and the polarization direction adjustment are performed and the second light beam on which the second phase adjustment and the polarization direction adjustment are not performed. In addition, the first light beam and the second light beam have different propagation directions after passing through the liquid crystal layer. It can be learned that different adjustment is performed on the light on which polarization direction adjustment is performed and the light on which polarization direction adjustment is not performed in the polarization-insensitive device, so that the light on which polarization direction adjustment is performed and the light on which polarization direction adjustment is not performed have different propagation directions when being emitted from the polarization-insensitive device, and the two types of light are isolated in space, to avoid impact of a light component of the light in the first polarization direction on which polarization direction adjustment is not performed on a light adjustment apparatus.

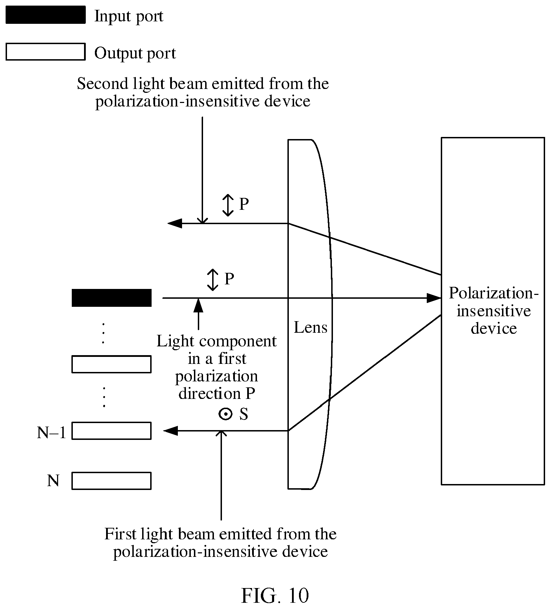

For example, when the light adjustment apparatus is a WSS, as shown in FIG. 10, an example in which a light component in the first polarization direction P is emitted from the input port to the polarization-insensitive device is used. The adjustment layer may be designed to emit, after a first light beam obtained based on the light component existing after passing through the liquid crystal layer is emitted from the polarization-insensitive device, the first light beam to an output port N-1 (N>1); and the adjustment layer emits, after a second light beam obtained based on the light component existing passing through the liquid crystal layer is emitted from the polarization-insensitive device, the second light beam to a direction that deviates from the output port. Therefore, crosstalk between ports caused by the second light beam on which polarization direction adjustment is not performed and that is emitted from the polarization-insensitive device to the output port is avoided.

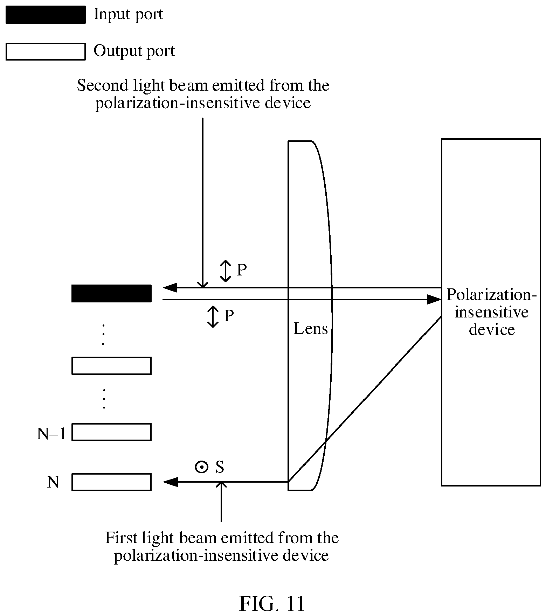

A phase of the first light beam emitted from the polarization-insensitive device is not only related to the liquid crystal layer 11, but also related to the adjustment layer 12. A phase of the second light beam emitted from the polarization-insensitive device is related to the liquid crystal layer 11, but is not related to the adjustment layer 12. It is assumed that no electric field is applied to the columnar liquid crystal. As shown in FIG. 11, under the effect of the second phase adjustment of the adjustment layer 12, in the light emitted from the polarization-insensitive device, the first light beam (on which the polarization direction adjustment and the second phase adjustment are performed) is emitted from the polarization-insensitive device to a port N, and the second light beam (on which the polarization direction adjustment and the second phase adjustment are not performed) is emitted from the polarization-insensitive device to the input port along an original path. When an electric field is applied to the liquid crystal layer, the liquid crystal layer may enable the light emitted from the polarization-insensitive device in FIG. 11 to deflect upward by a distance of one port. In this way, the light emitted from the polarization-insensitive device can have a transmission status shown in FIG. 10.

It may be understood that, in addition to the light component in the first polarization direction, the light component emitted to the liquid crystal layer, from the side that is of the liquid crystal layer and that is away from the adjustment layer may further include a light component in another polarization direction (for example, a second polarization direction perpendicular to the first polarization direction) different from the first polarization direction. The liquid crystal layer may be configured to skip performing the first phase adjustment on the light component in the another polarization direction under the action of the electric field. After the light component in the another polarization direction passes through the liquid crystal layer and is emitted to the adjustment layer, the adjustment layer may be further configured to obtain a third light beam and a fourth light beam based on the incident light component that is in the another polarization direction and that passes through the liquid crystal layer, and transmit the third light beam and the fourth light beam to the liquid crystal layer. The third light beam undergoes second phase adjustment and polarization direction adjustment at the adjustment layer, but the fourth light beam does not undergo second phase adjustment and polarization direction adjustment at the adjustment layer. The polarization direction adjustment is used to change the polarization direction by 90 degrees. Therefore, the polarization direction of the third light beam is perpendicular to a polarization direction of the third light beam obtained before the polarization direction adjustment (a polarization direction of the third light beam obtained before the third light beam passes through the adjustment layer). Propagation directions of the third light beam and the fourth light beam after passing through the liquid crystal layer are different. In this way, the impact on the light adjustment apparatus caused by light components in other polarization directions on which polarization direction adjustment is not performed can also be avoided.

In other words, a light component in at least one polarization direction is emitted to the liquid crystal layer from a side that is of the liquid crystal layer and that is away from the adjustment layer, and the liquid crystal layer is configured to perform, under action of an electric field, first phase adjustment on a light component in a first polarization direction in the light component in the at least one polarization direction. For a light component in each of the at least one polarization direction that is emitted to the adjustment layer and that passes through the liquid crystal layer, the adjustment layer may obtain two types of light beams based on the light component, and transmit the two types of light beams to the liquid crystal layer. In the two types of light beams, second phase adjustment and polarization direction adjustment are performed on one type of light beam in the adjustment layer, and the second phase adjustment and the polarization direction adjustment are not performed on the other type of light beam in the adjustment layer. In addition, the polarization direction adjustment is used to change a polarization direction by 90 degrees. The two types of light beams propagate in different propagation directions after passing through the liquid crystal layer. In this way, impact on the light adjustment apparatus caused by a light component in each polarization direction on which polarization direction adjustment is not performed can also be avoided.

Optionally, it may be understood that, when the at least one polarization direction includes another polarization direction other than the first polarization direction, the adjustment layer may not be configured to transmit the third light beam and the fourth light beam to the liquid crystal layer based on an incident light component that passes through the liquid crystal layer and that is in the another polarization direction. This is not limited in this application.

For a related explanation of the third light beam obtained by the adjustment layer based on the incident light component in each polarization direction that passes through the liquid crystal layer, refer to a related explanation of the first light beam obtained by the adjustment layer based on the incident light component in the first polarization direction that passes through the liquid crystal layer. For a related explanation of the fourth light beam obtained by the adjustment layer based on the incident light component in each polarization direction that passes through the liquid crystal layer, refer to a related explanation of the second light beam obtained by the adjustment layer based on the incident light component in the first polarization direction that passes through the liquid crystal layer. Details are not described herein in this application.

Further, different phase adjustment is performed at the adjustment layer on the foregoing two types of light beams transmitted by the adjustment layer to the liquid crystal layer. Optionally, other adjustment in the adjustment layer except the second phase adjustment and the polarization direction adjustment may alternatively be performed on a light beam that is in the two types of light beams and on which the second phase adjustment and the polarization direction adjustment are not performed. For example, third phase adjustment different from the second phase adjustment may be performed on the light beam at the adjustment layer. This is not limited in this application. For example, third phase adjustment different from the second phase adjustment may be performed on the second light beam and/or the fourth light beam at the adjustment layer. This is not limited in this application.

Further, the liquid crystal layer adjusts the propagation direction of the light component in the first polarization direction in a manner of the first phase adjustment, and the adjustment layer adjusts the propagation direction of the light component in the first polarization direction in a manner of the second phase adjustment. In this process, an amplitude of light is not adjusted, and therefore, energy loss of the light is small.

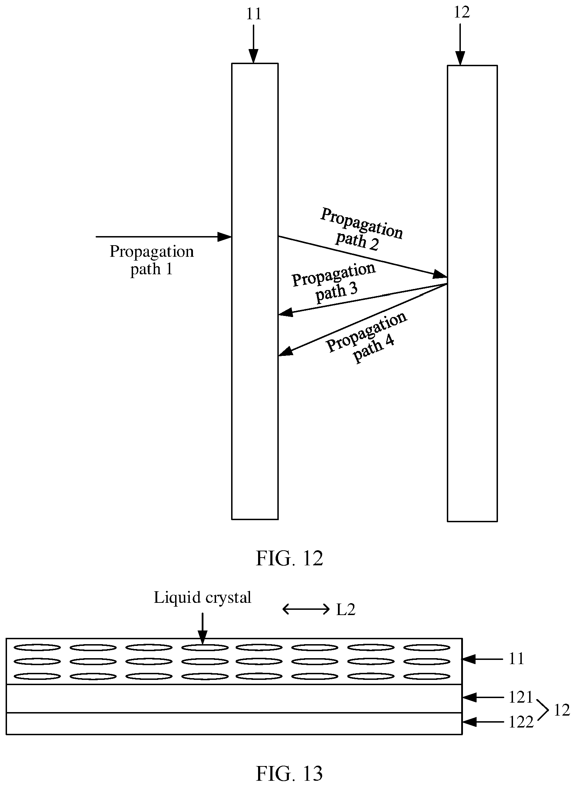

In addition, propagation paths (for example, a propagation path 1 and a propagation path 2 in FIG. 12) of the light component in the first polarization direction before and after passing through the liquid crystal layer 11 are both located on a first plane (for example, a paper plane in FIG. 12), and propagation paths (for example, a propagation path 3 and a propagation path 4 in FIG. 12) of the first light beam and the second light beam are both located on a second plane (for example, a paper plane in FIG. 12) when being emitted from the adjustment layer 12 to the liquid crystal layer 11. (The propagation paths of the third light beam and the fourth light beam when being emitted from the adjustment layer 12 to the liquid crystal layer 11 may also be both located in the second plane.) In FIG. 12, an example in which the first plane and the second plane are coplanar is used. Optionally, an included angle between the first plane and the second plane may be greater than zero degrees. For example, the included angle may be 90 degrees, or the included angle is less than 90 degrees (for example, the included angle is 80 degrees or 85 degrees).

Further, the adjustment layer 12 in the polarization-insensitive device provided in this embodiment of this application may be implemented in a plurality of manners.

For example, as shown in FIG. 13, the adjustment layer 12 may include a function layer 121 and a reflection layer 122 that are sequentially stacked in a direction away from the liquid crystal layer 11, and a reflection surface of the reflection layer 122 faces the function layer 121; and the second phase adjustment and the polarization direction adjustment occur at the function layer 121. For the light component emitted from the side that is of the liquid crystal layer 11 and that is away from the adjustment layer 12, after passing through the liquid crystal layer 11, the light component is transmitted along a sequence of the function layer 121, the reflection layer 122, and the function layer 121 and arrives at the liquid crystal layer 11 again. In this process, the light component in the first polarization direction passes through the function layer 121 twice. In this case, the second phase adjustment may include: phase adjustment in a process in which the light component in the first polarization direction passes through the function layer 121 for the first time, and other phase adjustment in a process in which the light component in the first polarization direction passes through the function layer 121 for the second time. The polarization direction adjustment may include: The light component in the first polarization direction is changed from a first linearly polarized light to a circularly polarized light in a process of passing through the function layer 121 for the first time, and the light component in the first polarization direction is changed from the circularly polarized light to a second linearly polarized light in a process of passing through the function layer 121 for the second time, and a polarization direction of the first linearly polarized light is perpendicular to a polarization direction of the second linearly polarized light. For polarization direction adjustment performed on the light component in the first polarization direction by the function layer 121, refer to the polarization direction adjustment on the light component by the HWP 021. The function layer 121 may be configured to implement functions of the HWP 021.

For another example, the adjustment layer 12 may alternatively include the foregoing function layer 121, and does not include the foregoing reflection layer 122. In this case, a reflection function needs to be designed for the function layer 121, so that the function layer 121 can transmit, to the liquid crystal layer 11, the first light beam and the second light beam that are obtained based on the light component in the first polarization direction.

Further, a part (for example, the foregoing function layer 121) that is in the adjustment layer 12 and that is used to perform the second phase adjustment and the polarization direction adjustment may be implemented in a plurality of manners.

For example, the part that is of the adjustment layer 12 and that is used to perform the second phase adjustment and the polarization direction adjustment may include a plurality of adjustment structures, and the plurality of adjustment structures may form a metasurface structure or another structure different from the metasurface structure. The adjustment layer 12 may perform phase adjustment and polarization direction adjustment on light by using the plurality of adjustment structures. Both the second phase adjustment and the polarization direction adjustment are related to at least one parameter of a material, a size, a shape, and an arrangement manner of the adjustment structure. When the part that is of the adjustment layer 12 and that is used to perform the second phase adjustment and the polarization direction adjustment is designed, the at least one parameter may be set based on a function that needs to be implemented by the adjustment layer 12. For at least one parameter of a material, a size, a shape, and an arrangement manner of the adjustment structure, refer to related descriptions in subsequent embodiments.

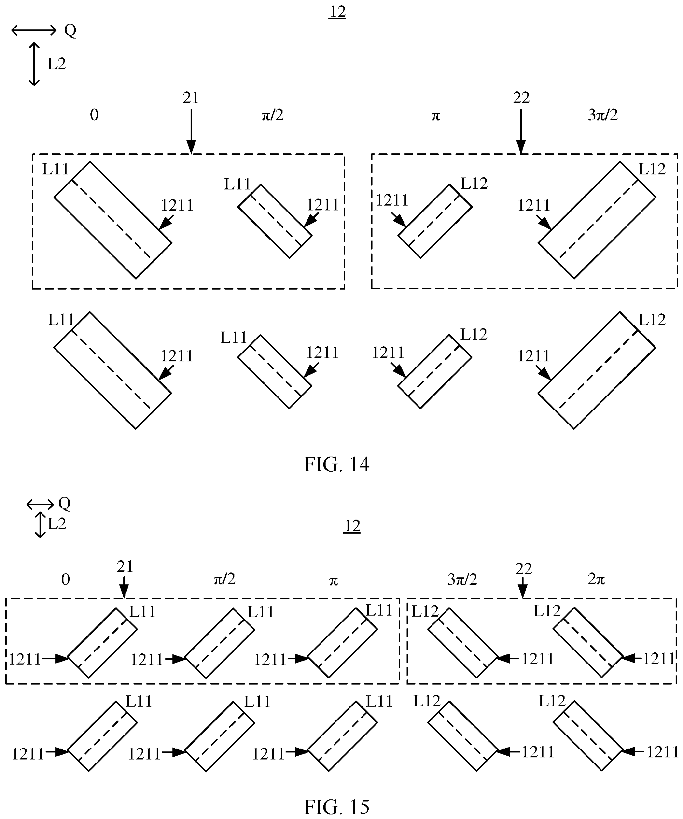

For another example, as shown in FIG. 14, the part that is of the adjustment layer 12 and that is used to perform the second phase adjustment and the polarization direction adjustment includes a plurality of adjustment structures 1211 that are arranged at intervals. The plurality of adjustment structures 1211 include a first adjustment structure group 21 and a second adjustment structure group 22 that are alternately arranged in a first direction Q. FIG. 14 shows only one first adjustment structure group 21 and one second adjustment structure group 22. It may be understood that the plurality of adjustment structures 1211 may alternatively include a plurality of first adjustment structure groups 21 and a plurality of second adjustment structure groups 22. In this case, the first adjustment structure group 21 and the second adjustment structure group 22 are alternatively arranged in the first direction Q. A range of an included angle between a longest central axis L11 of an adjustment structure 1211 in the first adjustment structure group 21 and a longest central axis L12 of an adjustment structure 1211 in the second adjustment structure group 22 is [80 degrees, 100 degrees]. For example, FIG. 14 uses an example in which the longest central axis L11 of the adjustment structure 1211 in the first adjustment structure group 21 is perpendicular to the longest central axis L12 of the adjustment structure 1211 in the second adjustment structure group 22.

It should be noted that the adjustment structure 1211 has a central axis, and the adjustment structure 1211 may be symmetrical (completely symmetric) or approximately symmetric (not completely symmetric) with respect to the central axis. The adjustment structure 1211 may have one or more central axes. This is not limited in this embodiment of this application. However, the one or more central axes have a longest central axis (for example, the L11 and the L12). For example, the adjustment structure 1211 may be in a rod shape (for example, a cuboid, a cylinder, or an ellipse) or an ellipsoid shape (or another shape). An example in which the adjustment structure 1211 is a cuboid is used in FIG. 14. The adjustment structure 1211 is characterized by anisotropy. The longest central axis of the adjustment structure 1211 may be referred to as a long axis, and a shortest central axis may be referred to as a short axis. The adjustment structure 1211 may be in a regular shape, or may be in an irregular shape. This is not limited in this embodiment in this application.

Optionally, the first adjustment structure group 21 and the second adjustment structure group 22 include at least two adjustment structures 1211 that are sequentially arranged in the first direction Q, and phase retardance amounts, of the first light beam (a light beam emitted from the liquid crystal layer 11 to the adjustment layer 12) existing before passing through the adjustment layer 12, on the at least two adjustment structures 1211 are in ascending order or descending order. In FIG. 14, an example in which the first direction Q may be perpendicular to a major axis direction L2 of a liquid crystal in the liquid crystal layer 11 to which no electric field is applied. The first direction Q may alternatively be another direction. This is not limited in this embodiment of this application. As shown in FIG. 14, the first adjustment structure group 21 and the second adjustment structure group 22 include the at least two adjustment structures 1211, and in a direction from left to right, phase retardance amounts of the first light beam existing before passing through the adjustment layer 12 on the at least two adjustment structures 1211 are sequentially 0, π/2, π, and 3π/2, and these phase retardance amounts are in ascending order. In this embodiment of this application, a change range of the phase retardance amounts, of the first light beam existing before passing through the adjustment layer 12, on the at least two adjustment structures 1211 is [0, 2π]. Optionally, the change range may not be [0, 2π]. For example, the change range is [0, π], [0, 3π/2], or [π, 2π]. In addition, in this embodiment of this application, an example in which a difference between phase retardance amounts, of the first light beam existing before passing through the adjustment layer 12, on adjacent adjustment structures 1211 in the first direction Q is π/2 is used. Optionally, the difference between phase retardance amounts, of the first light beam existing before passing through the adjustment layer 12, on adjacent adjustment structures 1211 in the first direction Q may not be π/2. For example, the difference between phase retardance amounts, of the first light beam existing before passing through the adjustment layer 12, on adjacent adjustment structures 1211 in the first direction Q is π, or the like.

The phase retardance amounts, of the first light beam existing before passing through the adjustment layer 12, on the at least two adjustment structures 1211 may be in linear ascending order or linear descending order, or may be in non-linear ascending order or non-linear descending order. For example, in FIG. 14, in a direction from left to right, the phase retardance amounts, of the first light beam existing before passing through the adjustment layer 12, on the at least two adjustment structures 1211 are in linear ascending order. Compared with a case in which the phase retardance amounts, of the first light beam existing before passing through the adjustment layer 12, on the at least two adjustment structures 1211 are in non-linear ascending order or non-linear descending order, in a case in which the phase retardance amounts, of the first light beam existing before passing through the adjustment layer 12, on the at least two adjustment structures 1211 are in linear ascending order or linear descending order, energy of light emitted from the polarization-insensitive device is higher.

When the phase retardance amounts, of the first light beam existing before passing through the adjustment layer 12, on the at least two adjustment structures 1211 are in ascending order or descending order, in the first direction Q, these adjustment structures 1211 form a phase gradient for the phase retardance amounts of the first light beam existing before passing through the adjustment layer 12. The phase gradient may change a phase of light, to perform second phase adjustment on the first light beam existing before passing through the adjustment layer 12. For example, sinθ=P/K. θ=α-β, where α represents an adjustment angle of the polarization-insensitive device for a propagation direction of the first light beam existing before passing through the liquid crystal layer 11; and β represents an adjustment angle of a part of the polarization-insensitive device except the adjustment layer for a propagation direction of the first light beam existing before passing through the liquid crystal layer 11. In other words, θ may be considered as a change angle of an adjustment angle of the polarization-insensitive device for a propagation direction of the first light beam existing before passing through the liquid crystal layer 11 that is vertically emitted after the adjustment layer 12 is introduced. sinθ represents a sine of θ, P represents a phase gradient, and K represents a light wave vector.

Further, the polarization-insensitive device may further meet at least one of the following conditions: a quantity of adjustment structures 1211 in the first adjustment structure group 21 is the same as a quantity of adjustment structures 1211 in the second adjustment structure group 22; adjustment structures 1211 with a same ranking in the first adjustment structure group 21 and the second adjustment structure group 22 have a same size; and for one adjustment structure group in the first adjustment structure group 21 and the second adjustment structure group 22, when a quantity of adjustment structures 1211 in the adjustment structure group is greater than 1, sizes of different adjustment structures in the adjustment structure group are different. An example in which the polarization-insensitive device meets all these conditions is used is FIG. 14.

It may be understood that, a quantity of adjustment structures 1211 in the first adjustment structure group 21 and a quantity of adjustment structures 1211 in the second adjustment structure group 22 may alternatively be different; and/or adjustment structures 1211 with a same ranking in the first adjustment structure group 21 and the second adjustment structure group 22 may alternatively have different sizes; and/or for one adjustment structure group in the first adjustment structure group 21 and the second adjustment structure group 22, when a quantity of adjustment structures 1211 in the adjustment structure group is greater than 1, sizes of different adjustment structures in the adjustment structure group may alternatively be the same.

For example, as shown in FIG. 15, a quantity of adjustment structures 1211 in the first adjustment structure group 21 is different from a quantity of adjustment structures 1211 in the second adjustment structure group 22. For example, the first adjustment structure group 21 includes three adjustment structures 1211, and the second adjustment structure group 22 includes two adjustment structures 1211. Sizes of the adjustment structures 1211 in the first adjustment structure group 21 are the same as sizes of the adjustment structures 1211 in the second adjustment structure group 22, and the longest central axis L11 of the adjustment structure 1211 in the first adjustment structure group 21 is perpendicular to the longest central axis L12 of the adjustment structure 1211 in the second adjustment structure group 22.

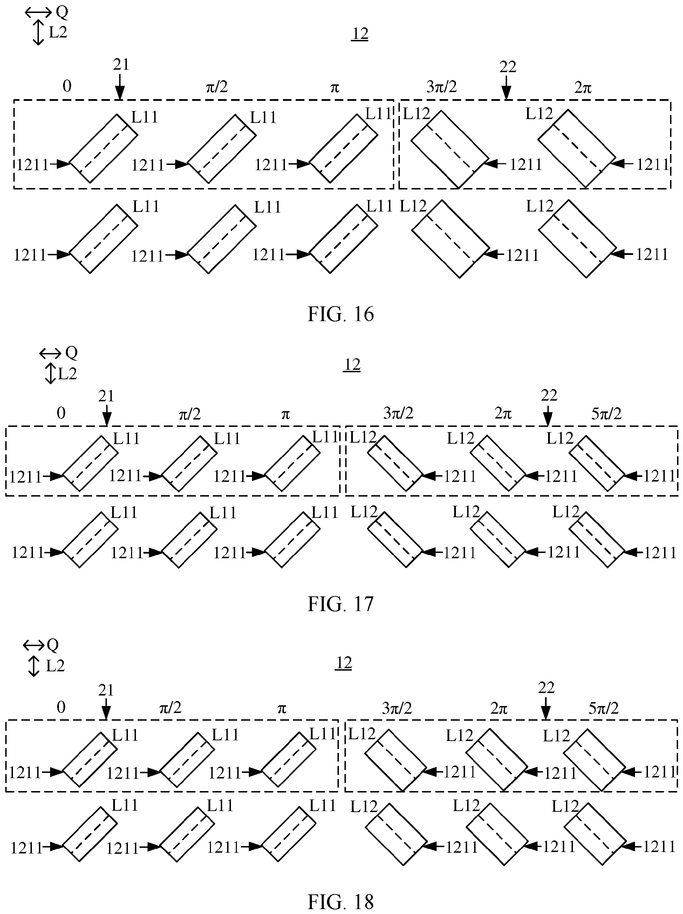

For another example, as shown in FIG. 16, on the basis of FIG. 15, the sizes of the adjustment structures 1211 in the first adjustment structure group 21 are the same, the sizes of the adjustment structures 1211 in the second adjustment structure group 22 are the same, and the sizes of the adjustment structures 1211 in the first adjustment structure group 21 are different from the sizes of the adjustment structures 1211 in the second adjustment structure group 22.

For another example, as shown in FIG. 17, on the basis of FIG. 15, a quantity of adjustment structures 1211 in the first adjustment structure group 21 is the same as a quantity of adjustment structures 1211 in the second adjustment structure group 22. For example, each of the two adjustment structure groups may include three adjustment structures 1211.

For another example, as shown in FIG. 18, on the basis of FIG. 16, a quantity of adjustment structures 1211 in the first adjustment structure group 21 is the same as a quantity of adjustment structures 1211 in the second adjustment structure group 22. For example, each of the two adjustment structure groups may include three adjustment structures 1211.

In addition, a material of the adjustment structure 1211 may include a material such as gold, silver, aluminum, silicon, gallium nitride, and titanium oxide. The adjustment structure may 1211 include one material, or may include a plurality of materials. In addition, a refractive index of an outer layer material of the adjustment structure 1211 in the first adjustment structure group 21 may be the same as or different from a refractive index of an outer layer material of the adjustment structure in the second adjustment structure group. For example, on the basis of FIG. 14, FIG. 15, FIG. 16, FIG. 17, and FIG. 18, a refractive index of an outer layer material of the adjustment structure 1211 in the first adjustment structure group 21 may be different from a refractive index of an outer layer material of the adjustment structure in the second adjustment structure group.

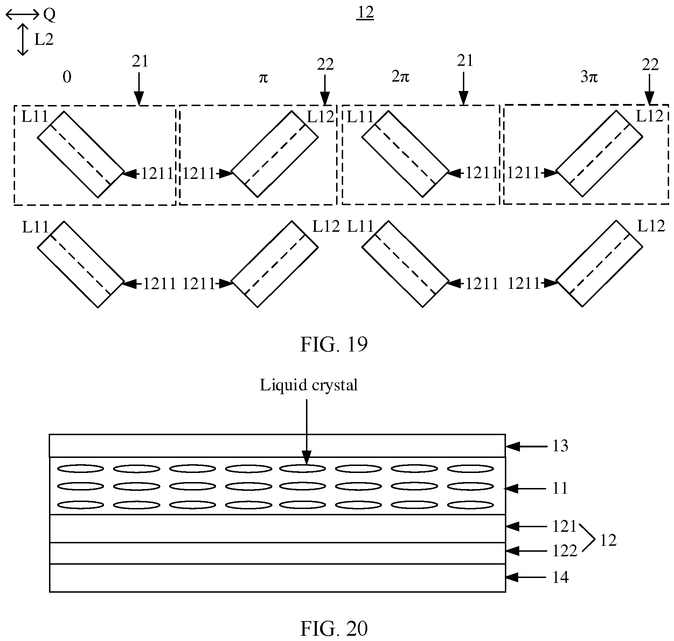

Further, for one adjustment structure group in the first adjustment structure group 21 and the second adjustment structure group 22, a quantity of adjustment structures 1211 in the adjustment structure group may be 1, or may be greater than 1. For example, in FIG. 14, FIG. 15, FIG. 16, FIG. 17, and FIG. 18, the quantity is greater than 1. For example, when the quantity is 1, a plurality of adjustment structures may be shown in FIG. 19.

Optionally, when the plurality of adjustment structures 1211 include some adjustment structures 1211 arranged in a direction (for example, the major axis direction L2) perpendicular to the first direction Q, phase retardance amounts of the first light beam existing before passing through the adjustment layer 12 on different adjustment structures 1211 in these adjustment structures 1211 may be the same. For example, different adjustment structures 1211 arranged in the direction L2 in FIG. 14 may have a same size, and/or different adjustment structures arranged in the direction perpendicular to the first direction have longest central axes parallel to each other, so that phase retardance amounts of the first light beam existing before passing through the adjustment layer 12 on these adjustment structures 1211 may be the same. It may be understood that phase retardance amounts of the first light beam on different adjustment structures 1211 arranged in the direction L2 may alternatively be different. Alternatively, the plurality of adjustment structures 1211 may not include different adjustment structures 1211 arranged in a direction perpendicular to the first direction Q. For example, the plurality of adjustment structures 1211 include only one row of adjustment structures 1211 in FIG. 14. This is not limited in this embodiment of this application.

The plurality of adjustment structures 1211 may be arranged in an array (as shown in FIG. 14), or certainly, may not be arranged in an array.

Optionally, a range of an included angle between the longest central axis (for example, L11 and L12) of the adjustment structure 1211 and the major axis direction L2 of a liquid crystal in the liquid crystal layer 11 in FIG. 9 to which no electric field is applied is [40 degrees, 50 degrees], and a range of a difference between a phase retardance amount, of the first light beam existing before passing through the adjustment layer 12, on the adjustment structure 1211 in an extension direction of the longest central axis of the adjustment structure 1211 and a phase retardance amount, of the first light beam existing before passing through the adjustment layer 12, on the adjustment structure 1211 in a direction perpendicular to the extension direction is [0.9π, 1.1π] (the directions are two orthogonal directions). In this case, the adjustment structure 1211 can perform the polarization direction adjustment on the first light beam. For example, the difference between the phase retardance amounts may be π, and/or the included angle may be 45 degrees. It should be noted that the longest central axis of the adjustment structure 1211 may be rotated clockwise by 45 degrees relative to the major axis direction L2, or may be rotated counterclockwise by 45 degrees. This is not limited in this embodiment of this application.

In this embodiment of this application, parameters such as a material, a size, a shape, and an arrangement manner (related to the longest central axis of the adjustment structure 1211, an arrangement sequence of the adjustment structure, a distance between centers of adjacent adjustment structures 1211, and the like) of the adjustment structure 1211 may be designed and adjusted, so that the adjustment layer 12 has functions of the second phase adjustment and the polarization direction adjustment.

For example, in the example shown in FIG. 14, a range of a maximum length (for example, a length of the longest central axis) of the adjustment structure 1211 may be [500 nanometers, 1000 nanometers], a range of a maximum width (a width of the adjustment structure may be perpendicular to the longest central axis) of the adjustment structure 1211 may be [100 nanometers, 300 nanometers], and a range of a distance between centers of adjacent adjustment structures 1211 may be [600 nanometers, 1000 nanometers].

Further, regardless of how the adjustment structure 1211 is arranged, a maximum length of the adjustment structure 1211 may be less than a wavelength of incident light, and the adjustment structure 1211 may be referred to as a sub-wavelength structure. A wavelength of light is usually a nanometer-level length. Therefore, when the maximum length of the adjustment structure 1211 is less than the wavelength of the light, the size of the adjustment structure 1211 is small, a thickness of the adjustment layer 12 in which the adjustment structure 1211 is located is small, a thickness of the entire polarization-insensitive device is small, a drive voltage used to drive the liquid crystal layer is small, and power consumption for driving the liquid crystal layer to deflect is small.

In this embodiment of this application, an example in which the maximum length of the adjustment structure 1211 is a nanometer-level length is used. Optionally, the maximum length of the adjustment structure 1211 may be a micron-level length or the like. This is not limited in this embodiment of this application. When the adjustment structure 1211 has a micron-level size or a nanometer-level size, the adjustment structure 1211 may be referred to as a micro-nano structure.

In the foregoing embodiment, an example in which a part that is of the adjustment layer 12 and that is used to perform the second phase adjustment and the polarization direction adjustment includes a plurality of adjustment structures 1211 is used. The plurality of adjustment structures 1211 may belong to one layer of adjustment structure 1211. The layer of adjustment structure 1211 includes a plurality of cells. A structure of each cell may include the first adjustment structure group and the second adjustment structure group. The plurality of cells may be at least two cells sequentially arranged in the first direction. Optionally, the plurality of cells may alternatively include at least two cells that are sequentially arranged in a direction perpendicular to the first direction.

Optionally, the part that is of the adjustment layer 12 and that is used to perform the second phase adjustment and the polarization direction adjustment may include a plurality of sublayers, and each sublayer includes the foregoing plurality of adjustment structures 1211. For the plurality of adjustment structures 1211 in each sublayer, refer to the plurality of adjustment structures 1211 in the foregoing embodiment. Details are not described in this embodiment of this application.

It should be noted that, in the foregoing embodiment, that the adjustment layer performs the second phase adjustment and the polarization direction adjustment by using the plurality of adjustment structures is used as an example. It may be understood that, when the adjustment layer further needs to perform other adjustment (for example, the third phase adjustment that may be performed on the second light beam) in addition to the second phase adjustment and the polarization direction adjustment, the other adjustment may also be implemented by using the plurality of adjustment structures. At least one of parameters such as a material, a size, a shape, and an arrangement manner of the adjustment structure may be designed based on functions required by the plurality of adjustment structures.

Further, the liquid crystal layer may deflect under action of an electric field, to perform phase adjustment on the light component having the first polarization direction P. The electric field may be applied to the liquid crystal layer by an electric field applying component. The electric field applying component may be located inside the polarization-insensitive device, or may be located outside the polarization-insensitive device, or a part of the electric field applying component is located inside the polarization-insensitive device, and the other part is located outside the polarization-insensitive device.

For example, as shown in FIG. 20, when the adjustment layer 12 includes the function layer 121 and the reflection layer 122, based on 12B, the polarization-insensitive device further includes a transparent electrode layer 13 and a liquid crystal drive circuit 14, the transparent electrode layer 13 is located on a side that is of the liquid crystal layer 11 and that is away from the reflection layer 122, the liquid crystal drive circuit 14 is located on a side that is of the reflection layer 122 and that is away from the liquid crystal layer 11, and the reflection layer 122 is conductive; and the liquid crystal drive circuit 14 is configured to apply a voltage to the transparent electrode layer 13 and the reflection layer 122, so that the electric field is formed between the transparent electrode layer 13 and the reflection layer 122. The electric field applying component includes: a transparent electrode layer 13, a reflection layer 122, and a liquid crystal drive circuit 14. The transparent electrode layer 13 may be made of a transparent conductive material, such as indium tin oxide. The reflection layer 122 may include a plurality of reflection blocks (not shown in FIG. 20) that are arranged in an array and that are spaced from each other, and an electric field exists between each reflection block and the transparent electrode layer 13.

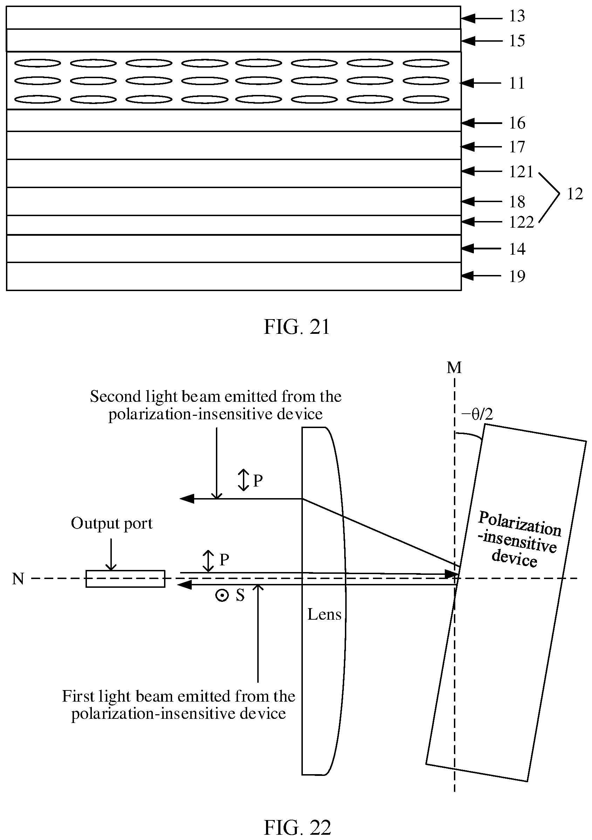

Further, the polarization-insensitive device further includes another structure. Refer to FIG. 21. For example, the polarization-insensitive device further includes a first alignment layer 15, a second alignment layer 16, a planarization layer 17, and a passivation layer 18. In the polarization-insensitive device, the transparent electrode layer 13, the first alignment layer 15, the liquid crystal layer 11, the second alignment layer 16, the planarization layer 17 (also referred to as a coating layer), the function layer 121, the passivation layer 18, the reflection layer 122, and the liquid crystal drive circuit 14 are sequentially stacked. The first alignment layer 15 and the second alignment layer 16 are configured to align the liquid crystal layer 11, so that major axis directions of liquid crystals in the liquid crystal layer 11 are parallel to each other (or tend to be parallel to each other) when no electric field is applied. The planarization layer 17 is used for planarization of a surface of the function layer 121, to support a subsequent packaging process of the liquid crystal layer 11.

The polarization-insensitive device may further include a substrate 19. The liquid crystal drive circuit 14 may be located on the substrate 19. The transparent electrode layer 13, the first alignment layer 15, the liquid crystal layer 11, the second alignment layer 16, the planarization layer 17, the function layer 121, the passivation layer 18, the reflection layer 122, and the liquid crystal drive circuit 14 may be sequentially arranged in a direction approaching the substrate 19.

In conclusion, in the polarization-insensitive device provided in this embodiment of this application, the adjustment layer may transmit, to the liquid crystal layer based on the incident light component in the first polarization direction that passes through the liquid crystal layer, the first light beam on which the second phase adjustment and the polarization direction adjustment are performed and the second light beam on which the second phase adjustment and the polarization direction adjustment are not performed. In addition, the first light beam and the second light beam have different propagation directions after passing through the liquid crystal layer. It can be learned that different adjustment is performed on the light on which polarization direction adjustment is performed and the light on which polarization direction adjustment is not performed in the polarization-insensitive device, so that the light on which polarization direction adjustment is performed and the light on which polarization direction adjustment is not performed have different propagation directions when being emitted from the polarization-insensitive device, and the two types of light are isolated in space, to avoid impact of a light component of the light in the first polarization direction on which polarization direction adjustment is not performed on a light adjustment apparatus.

Based on the polarization-insensitive device provided in embodiments of this application, an embodiment of this application provides a light adjustment apparatus including the polarization-insensitive device. The light adjustment apparatus is configured to perform phase adjustment on light by using a polarization-insensitive device. For example, the light adjustment apparatus may be any apparatus that can perform phase adjustment on light, such as a WSS, a ROADM, a spatial light modulator, or a display apparatus.

Optionally, the light adjustment apparatus further includes a plurality of ports (including an input port and a plurality of output ports). The input port is configured to provide light to a side on which the liquid crystal layer of the polarization-insensitive device is located. The polarization-insensitive device is configured to emit the first light beam existing after passing through the liquid crystal layer (the first light beam that passes through the liquid crystal layer and that is emitted from a side that is of the liquid crystal layer and that is away from the adjustment layer) to the output port, and emit the second light beam that existing after passing through the liquid crystal layer (the second light beam that passes through the liquid crystal layer and that is emitted from the side that is of the liquid crystal layer and that is away from the adjustment layer) to a direction that deviates from the output port. In other words, when the light adjustment apparatus includes the input port and the plurality of output ports, a location of the output port may be designed, so that the first phase adjustment, the second phase adjustment, and the polarization direction adjustment are performed on a light beam emitted from the polarization-insensitive device to the output port in the polarization-insensitive device, and a light beam on which the second phase adjustment and the polarization direction adjustment are not performed in the polarization-insensitive device is not emitted to the output port. In this way, port crosstalk caused by a light beam on which polarization direction adjustment is not performed being emitted to the output port can be avoided.

Further, according to the foregoing embodiments, propagation paths of the light component in the first polarization direction before and after passing through the liquid crystal layer are both on a first plane, and propagation paths of the first light beam and the second light beam emitted from the adjustment layer to the liquid crystal layer are both on a second plane. The first plane and the second plane are coplanar, or an included angle between the first plane and the second plane is greater than zero degrees.

In a first possible implementation, when the first plane and the second plane are coplanar, the input port and the plurality of output ports are sequentially arranged in a direction parallel to the first plane and the polarization-insensitive device, and the polarization-insensitive device is perpendicular to the first plane. It should be noted that the polarization-insensitive device is a device obtained by stacking a plurality of film layers. That the polarization-insensitive device is perpendicular to the first plane means that the plurality of film layers are all perpendicular to the first plane, and a stacking direction of the plurality of film layers is parallel to the first plane.

As shown in FIG. 11, both the first plane and the second plane are paper planes, and in this case, the plurality of output ports are located on a side of the input port. A light beam on which the first phase adjustment, the second phase adjustment, and the polarization direction adjustment are performed in the polarization-insensitive device is emitted to an output port on the side of the input port, and a light beam on which the second phase adjustment and the polarization direction adjustment are not performed in the polarization-insensitive device is emitted to the input port (as shown in FIG. 11) or a side of the input port away from the output port.

In a second possible implementation, when the included angle between the first plane and the second plane is greater than zero degrees (for example, the included angle is 90 degrees), the plurality of ports are sequentially arranged in a direction parallel to the first plane and a reference plane, and the reference plane is perpendicular to the first plane; and the polarization-insensitive device rotates by -θ/2 relative to the reference plane, where θ=α-β, and α represents an adjustment angle of the polarization-insensitive device for a propagation direction of the first light beam existing before sequentially passing through the liquid crystal layer and the adjustment layer, and β represents an adjustment angle of a part of the polarization-insensitive device except the adjustment layer for a propagation direction of the first light beam existing before sequentially passing through the liquid crystal layer and the adjustment layer. A first light beam existing before sequentially passing through the liquid crystal layer and the adjustment layer is also referred to as an initial light beam, and the first light beam is obtained when the initial light beam sequentially passes through the liquid crystal layer and the adjustment layer.

As shown in FIG. 22, the first plane N is perpendicular to the paper plane, the second plane is the paper plane, the reference plane M is perpendicular to the first plane N, and a dispersion direction of the port is an up-down direction in FIG. 22. An arrangement direction of the plurality of ports (FIG. 22 shows only one output port) is a direction perpendicular to the paper plane in FIG. 22, and the arrangement direction is parallel to the first plane N and the reference plane M. In this case, the plurality of output ports may be located on one side or two sides of the input ports. In addition, the polarization-insensitive device rotates by -θ/2 relative to the reference plane M. For example, when it is assumed that θ=-30° (indicating a counterclockwise rotation of 30°), then -θ/2=15° (indicating a clockwise rotation of 15°), the polarization-insensitive device is rotated by 15 degrees clockwise relative to the reference plane M.

In a second possible implementation, adjustment performed by the polarization-insensitive device on the propagation direction of the first light beam existing before sequentially passing through the liquid crystal layer and the adjustment layer is related to three factors, and the three factors include: (1) the first phase adjustment performed by the liquid crystal layer on the light component in the first polarization direction under the action of the electric field; (2) the second phase adjustment of the adjustment layer; and (3) a rotation angle of the polarization-insensitive device relative to the reference plane M. Adjustment performed by the polarization-insensitive device on the propagation direction of the second light beam existing before sequentially passing through the liquid crystal layer and the adjustment layer is related to the factors (1) and (3).

When no electric field is applied to the liquid crystal layer, adjustment performed by the polarization-insensitive device on the propagation direction of the first light beam existing before sequentially passing through the liquid crystal layer and the adjustment layer is related to the factors (2) and (3). The factor (2) causes a change angle θ of the propagation direction, and the factor (3) causes a change angle -θ of the propagation direction. Therefore, the factors (2) and (3) cause the change angles of the propagation direction to offset each other.

When an electric field is applied to the liquid crystal layer, in one aspect, for the first light beam existing before sequentially passing through the liquid crystal layer and the adjustment layer, because the factor (2) and the factor (3) are offset each other, a propagation direction of the light beam when being emitted from the polarization-insensitive device is related to the factor (1), and the light beam may be transmitted to the output port under action of the liquid crystal layer. It can be learned that the first light beam on which polarization direction adjustment is performed is emitted to the output port after being emitted from the polarization-insensitive device. In another aspect, for the second light beam existing before sequentially passing through the liquid crystal layer and the adjustment layer, a propagation direction of the light beam when being emitted from the polarization-insensitive device is related to the factor (1) and the factor (3). The light beam may be transmitted to any side of the plurality of ports in a dispersion direction under influence of the factor (1) and the factor (3), to avoid a second light beam on which polarization direction adjustment is not performed from being emitted to the output port after being emitted from the polarization-insensitive device.

Further, the light adjustment apparatus may further include another structure. For example, as shown in FIG. 11 or FIG. 22, the light adjustment apparatus further includes a lens (for example, a convex lens) located between the polarization-insensitive device and the plurality of ports.

The light adjustment apparatus provided in this embodiment of this application may be used in an optical network system. Based on this, an embodiment of this application further provides an optical network system that includes the light adjustment apparatus. For example, the optical network system performs communication by using light, and the light adjustment apparatus may perform phase adjustment on the light by using a polarization-insensitive device in the optical network system, to implement port switching of the light.

The foregoing descriptions are merely optional embodiments of this application, but are not intended to limit this application. Any modification, equivalent replacement, or improvement made without departing from the spirit and principle of this application should fall within the protection scope of this application.

## Claims

1. A polarization-insensitive device, wherein the polarization-insensitive device comprises a liquid crystal layer and an adjustment layer that are stacked;
the liquid crystal layer is configured to perform, under action of an electric field, first phase adjustment on a passing light component in a first polarization direction;
the adjustment layer is configured to obtain a first light beam and a second light beam based on the incident light component in the first polarization direction that passes through the liquid crystal layer, and transmit the first light beam and the second light beam to the liquid crystal layer;
second phase adjustment and polarization direction adjustment are performed on the first light beam at the adjustment layer; a polarization direction of the first light beam is perpendicular to a polarization direction of the first light beam obtained before the polarization direction adjustment; and the first light beam and the second light beam have different propagation directions after passing through the liquid crystal layer.

2. The polarization-insensitive device according to claim 1, wherein a part that is of the adjustment layer and that is used to perform the second phase adjustment and the polarization direction adjustment comprises a plurality of adjustment structures that are arranged at intervals, and the plurality of adjustment structures comprise a first adjustment structure group and a second adjustment structure group that are alternately arranged in a first direction; and
a range of an included angle between a longest central axis of an adjustment structure in the first adjustment structure group and a longest central axis of an adjustment structure in the second adjustment structure group is [80 degrees, 100 degrees].

3. The polarization-insensitive device according to claim 2, wherein the longest central axis of the adjustment structure in the first adjustment structure group is perpendicular to the longest central axis of the adjustment structure in the second adjustment structure group.

4. The polarization-insensitive device according to claim 2 or 3, wherein the adjustment structure is in a rod shape or an ellipsoid shape.

5. The polarization-insensitive device according to any one of claims 2 to 4, wherein the first adjustment structure group and the second adjustment structure group comprise at least two adjustment structures that are sequentially arranged in the first direction, and phase retardance amounts, of the first light beam existing before passing through the adjustment layer, on the at least two adjustment structures are in ascending order or descending order.

6. The polarization-insensitive device according to claim 5, wherein the phase retardance amounts, of the first light beam existing before passing through the adjustment layer, on the at least two adjustment structures are in linear ascending order or linear descending order.

7. The polarization-insensitive device according to any one of claims 2 to 6, wherein the polarization-insensitive device meets at least one of the following conditions:
a quantity of adjustment structures in the first adjustment structure group is the same as a quantity of adjustment structures in the second adjustment structure group;
adjustment structures with a same ranking in the first adjustment structure group and the second adjustment structure group have a same size; and
for one adjustment structure group in the first adjustment structure group and the second adjustment structure group, when a quantity of adjustment structures in the adjustment structure group is greater than 1, sizes of different adjustment structures in the adjustment structure group are different.

8. The polarization-insensitive device according to any one of claims 2 to 7, wherein phase retardance amounts, of the first light beam existing before passing through the adjustment layer, on different adjustment structures arranged in a direction perpendicular to the first direction are the same.

9. The polarization-insensitive device according to claim 8, wherein longest central axes of the different adjustment structures arranged in the direction perpendicular to the first direction are parallel, and/or the different adjustment structures arranged in the direction perpendicular to the first direction have a same size.

10. The polarization-insensitive device according to any one of claims 2 to 9, wherein for one of the adjustment structures, a range of a difference between a phase retardance amount, of the first light beam existing before passing through the adjustment layer, on the adjustment structure in an extension direction of a longest central axis of the adjustment structure and a phase retardance amount, of the first light beam existing before passing through the adjustment layer, on the adjustment structure in a direction perpendicular to the extension direction is [0.9π, 1.1π]; and a range of an included angle between the longest central axis of the adjustment structure and a major axis of a liquid crystal in the liquid crystal layer to which no electric field is applied is [40 degrees, 50 degrees].

11. The polarization-insensitive device according to claim 10, wherein the difference between the phase retardance amounts is π, and/or the included angle between the longest central axis of the adjustment structure and the major axis of the liquid crystal in the liquid crystal layer to which no electric field is applied is 45 degrees.

12. The polarization-insensitive device according to any one of claims 2 to 11, wherein a maximum length of the adjustment structure is less than a wavelength of light.

13. The polarization-insensitive device according to claim 12, wherein the maximum length of the adjustment structure is a nanometer-level length.

14. The polarization-insensitive device according to any one of claims 2 to 13, wherein the part that is of the adjustment layer and that is used to perform the second phase adjustment and the polarization direction adjustment comprises a plurality of sublayers, and the sublayers comprise the plurality of adjustment structures.

15. The polarization-insensitive device according to any one of claims 2 to 14, wherein the part that is of the adjustment layer and that is used to perform the second phase adjustment and the polarization direction adjustment comprises the plurality of adjustment structures that are arranged at intervals, and both the second phase adjustment and the polarization direction adjustment are related to at least one parameter of a material, a size, a shape, and an arrangement manner of the adjustment structure.

16. The polarization-insensitive device according to claim 15, wherein the plurality of adjustment structures form a metasurface structure.

17. The polarization-insensitive device according to any one of claims 1 to 16, wherein propagation paths of the light component in the first polarization direction before and after passing through the liquid crystal layer are both on a first plane, and propagation paths of the first light beam and the second light beam emitted from the adjustment layer to the liquid crystal layer are both on a second plane; and
the first plane and the second plane are coplanar, or an included angle between the first plane and the second plane is greater than zero degrees.

18. The polarization-insensitive device according to claim 17, wherein the included angle between the first plane and the second plane is 90 degrees.

19. The polarization-insensitive device according to any one of claims 1 to 18, wherein third phase adjustment different from the second phase adjustment is performed on the second light beam at the adjustment layer.

20. The polarization-insensitive device according to any one of claims 1 to 19, wherein the first polarization direction is parallel to the major axis of the liquid crystal in the liquid crystal layer to which no electric field is applied.

21. The polarization-insensitive device according to any one of claims 1 to 20, wherein the adjustment layer comprises a function layer and a reflection layer that are sequentially stacked in a direction away from the liquid crystal layer, a reflection surface of the reflection layer faces the function layer, and the second phase adjustment and the polarization direction adjustment occur at the function layer.

22. The polarization-insensitive device according to claim 21, wherein the polarization-insensitive device further comprises a transparent electrode layer and a liquid crystal drive circuit, the transparent electrode layer is located on a side that is of the liquid crystal layer and that is away from the reflection layer, the liquid crystal drive circuit is located on a side that is of the reflection layer and that is away from the liquid crystal layer, and the reflection layer is conductive; and
the liquid crystal drive circuit is configured to apply a voltage to the transparent electrode layer and the reflection layer, so that the electric field is formed between the transparent electrode layer and the reflection layer.

23. The polarization-insensitive device according to claim 22, wherein the polarization-insensitive device comprises: the transparent electrode layer, a first alignment layer, the liquid crystal layer, a second alignment layer, a planarization layer, the function layer, a passivation layer, the reflection layer, and the liquid crystal drive circuit that are sequentially stacked.

24. A light adjustment apparatus, wherein the light adjustment apparatus comprises the polarization-insensitive device according to any one of claims 1 to 23, and the light adjustment apparatus is configured to perform phase adjustment on light by using the polarization-insensitive device.

25. The light adjustment apparatus according to claim 24, wherein the light adjustment apparatus further comprises a plurality of ports; and
the plurality of ports comprise an input port and a plurality of output ports, the input port is configured to provide light for a side on which a liquid crystal layer is located in the polarization-insensitive device, and the polarization-insensitive device is configured to: emit the first light beam existing after passing through the liquid crystal layer to the output port, and emit the second light beam existing after passing through the liquid crystal layer to a direction that deviates from the output port.

26. The light adjustment apparatus according to claim 25, wherein propagation paths of the light component in the first polarization direction before and after passing through the liquid crystal layer are both on a first plane, and propagation paths of the first light beam and the second light beam emitted from the adjustment layer to the liquid crystal layer are both on a second plane; the first plane and the second plane are coplanar; and
the input port and the plurality of output ports are sequentially arranged in a direction parallel to the first plane and the polarization-insensitive device, and the polarization-insensitive device is perpendicular to the first plane.

27. The light adjustment apparatus according to claim 25, wherein propagation paths of the light component in the first polarization direction before and after passing through the liquid crystal layer are both on a first plane, and propagation paths of the first light beam and the second light beam emitted from the adjustment layer to the liquid crystal layer are both on a second plane, and an included angle between the first plane and the second plane is greater than zero degrees;
and
the plurality of ports are sequentially arranged in a direction parallel to the first plane and a reference plane, and the reference plane is perpendicular to the first plane; and the polarization-insensitive device rotates by -θ/2 relative to the reference plane, wherein θ=α-β, and α represents an adjustment angle of the polarization-insensitive device for a propagation direction of the first light beam existing before sequentially passing through the liquid crystal layer and the adjustment layer, and β represents an adjustment angle of a part of the polarization-insensitive device except the adjustment layer for a propagation direction of the first light beam existing before sequentially passing through the liquid crystal layer and the adjustment layer.

28. The light adjustment apparatus according to any one of claims 24 to 27, wherein the light adjustment apparatus further comprises a lens located between the polarization-insensitive device and the plurality of ports.

29. An optical network system, wherein the optical network system comprises the light adjustment apparatus according to any one of claims 24 to 28.
